# EUROPÄISCHE PATENTSCHRIFT

(11) **EP 0 465 420 B1**
(45) Veröffentlichungstag und Bekanntmachung des Hinweises auf die Patenterteilung: **30.10.1996**
(21) Anmeldenummer: 91810492.8
(22) Anmeldetag: 24.06.1991
(51) Int. Cl.: C09B 43/11, C09B 43/16, C09B 62/09, D06P 3/82, D06P 3/60

(54) **Azofarbstoffe**
Azo dyestuffs
Colorants azoiques

(30) Priorität: 02.07.1990 CH 2195/90
(43) Veröffentlichungstag der Anmeldung: 08.01.1992
(60) Teilanmeldung: 96103936.9
(73) Patentinhaber: CIBA-GEIGY AG, 4002 Basel (CH)
(72) Erfinder: Schaulin, Rudolf, Dr., CH-4125 Riehen (CH); Lauk, Urs, Dr., CH-8047 Zürich (CH)

(56) Entgegenhaltungen:
- EP-A- 0 168 961
- EP-A- 0 256 650
- EP-A- 0 348 344
- FR-A- 2 228 822
- GB-A- 2 036 780
- CHEMICAL ABSTRACTS, Band 98, Nr, 2, Januar 1983, Seite 55, Zusammenfassung Nr. 5565w, Columbus, Ohio, US; & JP-A-57 102 972 (ORIENT CHEMICAL INDUSTRIES LTD) 26-06-1982

## Beschreibung

Die vorliegende Erfindung betrifft neue Azofarbstoffe, Verfahren zu deren Herstellung sowie deren Verwendung zum Färben und Bedrucken von Fasermaterialien, insbesondere von textilen Fasermaterialien.

Gegenstand der vorliegenden Erfindung sind Verbindungen der Formel 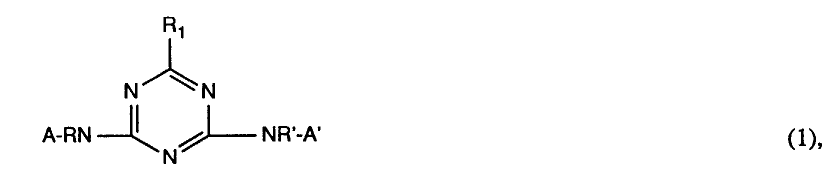 worin A ein Rest der Formel 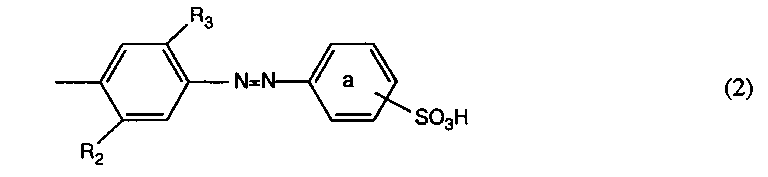 ist, A' die Bedeutung von A hat oder für einen Rest der Formel 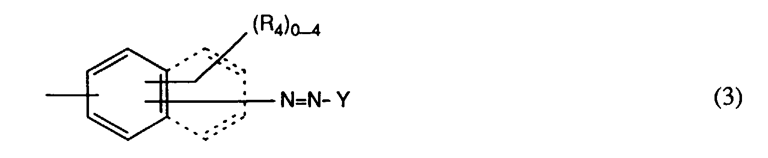 steht, R und R' unabhängig voneinander Wasserstoff oder gegebenenfalls substituiertes C₁-C₄-Alkyl bedeuten,
R₁ Hydroxy, C₁-C₄-Alkoxy, Chlor, Brom, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin- 1-yl ist,
R₂ und R₃ unabhängig voneinander C₁-C₄-Alkyl, C₁-C₄-Alkoxy oder unsubstituiertes oder im Alkylteil durch Hydroxy substituiertes C₂-C₄-Alkanoylamino bedeuten,
der Phenylrest (a) keine weiteren Substituenten enthält oder durch C₁-C₄-Alkyl, C₁-C₄-Alkoxy, Halogen, Hydroxy, Carboxy, Sulfo, unsubstituiertes oder durch Hydroxy substituiertes C₂-C₄-Alkanoylamino oder Arylazo weitersubstituiert ist,
(R₄)₀₋₄ für 0 bis 4 gleiche oder verschiedene Reste ausgewählt aus der Gruppe C₁-C₄-Alkyl, C₁-C₄-Alkoxy, Sulfo, Chlor, Carboxy und Hydroxy steht und Y ein Phenylrest oder der Rest eines 1-Phenylpyrazol-5-ons oder 6-Hydroxypyrid-2-ons ist, wobei die für Y genannten Reste durch C₁-C₄-Alkyl, C₁-C₄-Alkoxy, C₁-C₄-Alkoxy-C₁-C₄-alkyl, gegebenenfalls durch Hydroxy weitersubstituiertes C₂-C₄-Alkanoylamino, Benzoylamino, Amino, unsubstituiertes oder im Alkylteil durch -OH, -OCOCH₃, -OSO₃H, -CN oder Halogen weitersubstituiertes N-Mono- oder N,N-Di-C₁-C₄-Alkylamino, Phenylamino, Mono- oder Di-Sulfobenzylamino, C₁-C₄-Alkoxycarbonyl, C₁-C₄-Alkylsulfonyl, Phenylsulfonyloxy, Trifluormethyl, Nitro, Cyano, Halogen, Carbamoyl, N-Mono- oder N,N-Di-C₁-C₄-Alkylcarbamoyl, Sulfamoyl, N-Mono- oder N,N-Di-C₁-C₄-Alkylsulfamoyl, N-(β-hydroxyethyl)-sulfamoyl, N,N-Di-(β-hydroxyethyl)-sulfamoyl, N-Phenylsulfamoyl, Hydroxy, Carboxy, Sulfo, Sulfomethyl, Ureido oder unsubstituiertes oder durch Sulfo, C₁-C₄-Alkyl, C₁-C₄-Alkoxy, Hydroxy oder Halogen weitersubstituiertes Phenylazo substituiert sein können.

Aus der FR-A-2,228,822 sind Farbstoffe bekannt, welche zwei über ein Brückenglied verbundene Monoazofarbstoffreste enthalten, wobei das Brückenglied zwei Triazinylaminosulfophenylreste enthält.

Aus der GB-A-2,036,780 sind Farbstoffe bekannt, welche im Unterschied zu den Farbstoffen der vorliegenden Erfindung einen endständigen Naphthylrest enthalten.

Die in der EP-A-348,344 offenbarten Farbstoffe unterscheiden sich von den Farbstoffen der vorliegenden Erfindung hinsichtlich des Substituenten R₂.

Die Substituenten R und R', die gleich oder voneinander verschieden sind, haben die Bedeutung Wasserstoff oder unsubstituiertes oder z.B. durch Chlor, Hydroxy, Cyano, Carboxy, Sulfo, Sulfato, Methoxy, Ethoxy, Methoxycarbonyl oder Ethoxycarbonyl substituiertes C₁-C₄-Alkyl. Die Bedeutung Sulfo umfasst generell die freie Säureform (-SO₃H) als auch die Salzform, wobei insbesondere Alkalimetallsalze (Li, Na, K) oder Ammoniumsalze in Frage kommen.

Beispiele für geeignete Substituenten R und R' sind:
C₁-C₄-Alkyl, womit generell Methyl, Ethyl, n- oder iso-Propyl, oder n-, iso-, sec.- oder tert.-Butyl umfasst sind; Carboxymethyl, β-Carboxyethyl, Methoxycarbonylmethyl, Ethoxycarbonylmethyl, β-Methoxyethyl, β-Ethoxyethyl, β-Chlorethyl, γ-Chlorpropyl, β-Hydroxyethyl, β-Hydroxybutyl, β-Cyanethyl, Sulfomethyl, β-Sulfoethyl, β-Sulfatoethyl.

R und R' stehen unabhängig voneinander bevorzugt für Methyl oder Ethyl und besonders bevorzugt jeweils für Wasserstoff.

Bedeutet R₁ C₁-C₄-Alkoxy, so ist hierunter generell Methoxy, Ethoxy, n- oder iso-Propoxy oder n-, iso-, sec.- oder tert.-Butoxy zu verstehen.

R₁ steht bevorzugt für Hydroxy, C₁-C₃-Alkoxy, C₁-C₂-Alkylthio, Amino, unsubstituiertes oder im Alkylteil durch Hydroxy, Carboxy, Sulfo, Methoxy oder Ethoxy substituiertes N-Mono- oder N,N-Di-C₁-C₄-Alkylamino, unsubstituiertes oder im Phenylteil durch Chlor, Methyl, Methoxy, Carboxy und/oder Sulfo substituiertes Phenylamino, N-C₁-C₄-Alkyl-N-phenylamino oder Morpholino.

Beispiele für bevorzugte Substituenten R₁ sind somit Hydroxy, Methoxy, Ethoxy, n- oder iso-Propoxy, Methylthio, Ethylthio, Amino, Methylamino, Ethylamino, Carboxymethylamino, β-Hydroxyethylamino, N,N-Di-β-hydroxyethylamino, β-Sulfoethylamino, Phenylamino, o-, m- oder p-Methylphenylamino, o-, m- oder p-Methoxyphenylamino, o-, m-oder p-Chlorphenylamino, o-, m- oder p-Sulfophenylamino, 2,4- oder 2,5-Disulfophenylamino, o-Carboxyphenylamino, N-Ethyl-N-phenylamino, N-Methyl-N-phenylamino und Morpholino.

Besonders bevorzugt sind für R₁ die Bedeutungen unsubstituiertes oder im Alkylteil durch Carboxy, Hydroxy oder Methoxy substituiertes N-Mono- oder N,N-Di-C₁-C₂-Alkylamino, Morpholino, Ethylthio, Phenylamino und o-, m- oder p-Sulfophenylamino.

Eine besonders bevorzugte Ausführungsforrn der vorliegenden Erfindung betrifft Verbindungen der zuvor angegebenen Formel (1), worin R₁ N-β-Hydroxyethylamino, N,N-Di-β-hydroxyethylamino oder Morpholino bedeutet.

Bei R₂ oder R₃ in Formel (2) als C₂-C₄-Alkanoylaminorest handelt es sich z.B. um einen unsubstituierten oder durch Hydroxy substituierten Acetylamino-, Propionylamino oder Butyrylaminorest und vorzugsweise um einen unsubstituierten oder durch Hydroxy substituierten C₂-C₃-Alkanoylaminorest. Beispiele für geeignete Alkanoylaminoreste R₂ und R₃ sind Acetylamino, n-Propionylamino, iso-Propionylamino, Hydroxyacetylamino und 2-oder 3-Hydroxypropionylamino, wobei die Bedeutungen Acetylamino und Hydroxyacetylamino besonders bevorzugt sind

R₂ und/oder R₃ stehen unabhängig voneinander bevorzugt für Methyl, Ethyl, Methoxy, Ethoxy, Acetylamino, Propionylamino oder Hydroxyacetylamino.

Besonders bevorzugte Bedeutungen von R₂ und R₃ sind unabhängig voneinander Methyl, Methoxy und Acetylamino.

Eine besonders bevorzugte Ausführungsform der vorliegenden Erfindung betrifft Verbindungen der Formel (1), worin R₂ Methoxy und R₃ Methyl sind.

Der Phenylrest (a) kann durch einen oder mehrere gleiche oder verschiedene Substituenten ausgewählt aus der Gruppe C₁-C₄-Alkyl, C₁-C₄-Alkoxy, Halogen, Hydroxy, Carboxy, Sulfo, unsubstituiertes oder durch Hydroxy substituiertes C₂-C₄-Alkanoylamino und Arylazo weitersubstituiert sein.

Beispiele für Halogensubstituenten sind generell Brom, Fluor und besonders Chlor.

Geeignete Arylazo-Substituenten am Phenylrest (a) sind z.B. ein 1- oder 2-Naphthylazorest oder vorzugsweise ein Phenylazorest, wobei die genannten Reste jeweils unsubstituiert oder z.B. durch Sulfo, C₁-C₄-Alkyl, C₁-C₄-Alkoxy, Hydroxy und/oder Halogen weitersubstituiert sein können. Ist der Phenylrest (a) durch einen Arylazorest substituiert, handelt es sich dabei vorzugsweise um einen unsubstituierten oder durch Sulfo, Methyl, Methoxy und/oder Chlor substituierten Phenylazorest.

Der Phenylrest (a) trägt vorzugsweise keine weiteren Substituenten oder ist durch einen oder mehrere Substituenten ausgewählt aus der Gruppe C₁-C₄-Alkyl, C₁-C₄-Alkoxy, Chlor, Hydroxy, Carboxy, C₂-C₃-Alkanoylamino und unsubstituiertes oder durch Sulfo, Methyl, Methoxy und/oder Chlor substituiertes Phenylazo substituiert.

Besonders bevorzugt trägt der Phenylrest (a) keine weiteren Substituenten oder ist einfach durch Methyl, Methoxy, Acetylamino oder Chlor weitersubstituiert.

(R₄)₀₋₄ in Formel (3) steht vorzugsweise für 0 bis 4 gleiche oder verschiedene Reste ausgewählt aus der Gruppe Methyl, Methoxy, Chlor, Hydroxy, Carboxy und Sulfo.

Geeignete Substituenten am Rest Y sind:
C₁-C₄-Alkyl, C₁-C₄-Alkoxy; C₁-C₄-Alkoxy-C₁-C₄-alkyl, z.B. Methoxymethyl, Ethoxymethyl, n-Propoxymethyl, iso-Propoxymethyl, n-Butoxymethyl, Ethoxyethyl, n-Butoxyethyl, Ethoxypropyl, Butoxypropyl oder Methoxybutyl; gegebenenfalls durch Hydroxy substituiertes C₂-C₄-Alkanoylamino, z.B. Acetylamino, Propionylamino oder Hydroxyacetylamino; Benzoylamino; Amino; unsubstituiertes oder im Alkylteil durch -OH, -OCOCH₃, -OSO₃H, -CN oder Halogen substituiertes N-Mono- oder N,N-Di-C₁-C₄-Alkylamino, z.B. Methylamino, Ethylamino, n- oder iso-Propylamino, n-, sec.-, iso- oder tert.-Butylamino, N,N-Di-β-hydroxyethylamino, N,N-Di-β-sulfatoethylamino, Hydroxypropylamino, β-Sulfatoethylamino, β-Chlorethylamino, β-Acetyloxyethylamino; Phenylamino; Mono- oder Di-Sulfobenzylamino; C₁-C₄-Alkoxycarbonyl, z.B. Methoxy- oder Ethoxycarbonyl; C₁-C₄-Alkylsulfonyl, z.B. Methyl- oder Ethylsulfonyl; Phenylsulfonyloxy; Trifluormethyl; Nitro; Cyano; Halogen; Carbamoyl; N-Mono- oder N,N-Di-C₁-C₄-Alkylcarbamoyl; Sulfamoyl; N-Mono- oder N,N-Di-C₁-C₄-Alkylsulfamoyl;
N-(β-hydroxyethyl)-sulfamoyl; N,N-Di-(β-hydroxyethyl)-sulfamoyl; N-Phenylsulfamoyl; Hydroxy; Carboxy; Sulfo; Sulfomethyl; Ureido; unsubstituiertes oder durch Sulfo, C₁-C₄-Alkyl, C₁-C₄-Alkoxy, Hydroxy und/oder Halogen substituiertes Phenylazo.

A' entspricht als von A verschiedener Rest bevorzugt der Formel 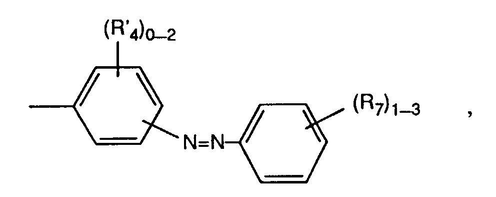 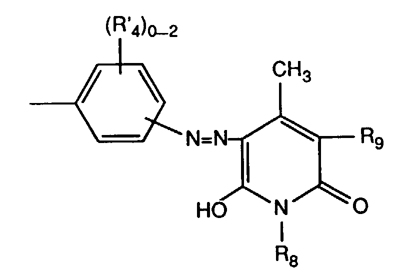 oder 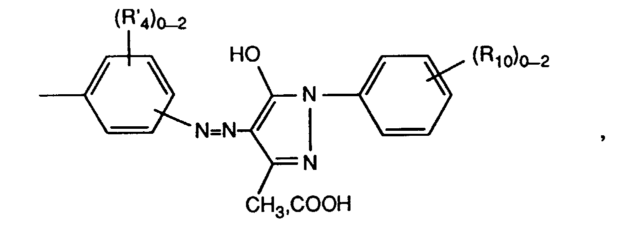 worin (R'₄)₀₋₂ für 0 bis 2 gleiche oder verschiedene Reste ausgewählt aus der Gruppe Methyl, Methoxy, Sulfo, Chlor, Hydroxy und Carboxy steht, (R₇)₁₋₃ 1 bis 3 gleiche oder verschiedene Substituenten ausgewählt aus der Gruppe Sulfo, Methyl, Methoxy, Chlor, Hydroxy, Carboxy und o-, m- oder p-Sulfophenylazo darstellt, R₈ Wasserstoff, C₁-C₄-Alkyl oder C₁-C₄-Alkoxy-C₁-C₄-alkyl bedeutet, R₉ Sulfomethyl, Cyano oder Carbamoyl ist und (R₁₀)₀₋₂ für 0 bis 2 gleiche oder verschiedene Reste ausgewählt aus der Gruppe Methyl, Methoxy, Sulfo, Hydroxy, Amino, Acetylamino und Hydroxyacetylamino steht.

Eine besonders bevorzugte Ausführungsforrn der vorliegenden Erfindung betrifft symmetrische Verbindungen der zuvor angegebenen Formel (1), worin A und A' und R und R' jeweils gleich sind.

Gute färberische Ergebnisse werden insbesondere erhalten mit Verbindungen der Formel 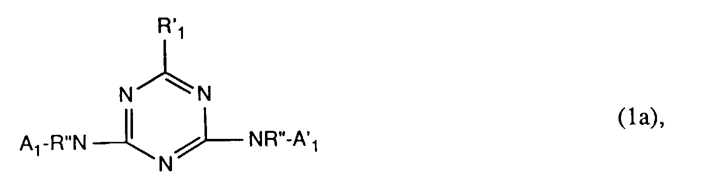 worin R" Wasserstoff, Methyl oder Ethyl bedeutet, R'₁ für Hydroxy, C₁-C₃-Alkoxy, C₁-C₂-Alkylthio, Amino, unsubstituiertes oder im Alkylteil durch Hydroxy, Carboxy, Sulfo, Methoxy oder Ethoxy substituiertes N-Mono- oder N,N-Di-C₁-C₄-Alkylamino, unsubstituiertes oder im Phenylteil durch Methoxy, Methyl, Chlor, Carboxy und/oder Sulfo substituiertes Phenylamino, N-C₁-C₄-Alkyl-N-phenylamino oder Morpholino steht, A₁ ein Rest der Formel 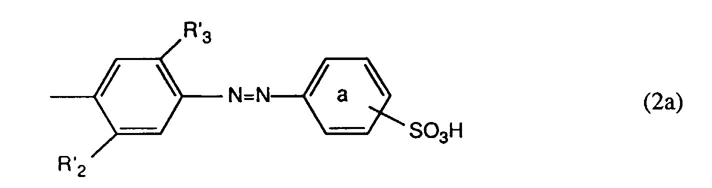 ist, worin R'₂ und R'₃ unabhängig voneinander für Methyl, Ethyl, Methoxy, Ethoxy, Acetylamino, Propionylamino oder Hydroxyacetylamino stehen und der Phenylrest (a) unsubstituiert oder durch C₁-C₄-Alkyl, C₁-C₄-Alkoxy, Halogen, Hydroxy, Carboxy, Sulfo, unsubstituiertes oder durch Hydroxy substituiertes C₂-C₄-Alkanoylamino und/oder Arylazo weitersubstituiert ist, und A'₁ für einen Rest der Formel 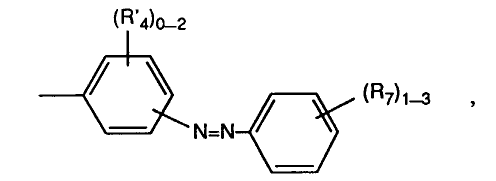 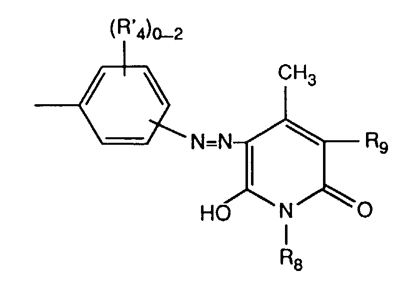 oder 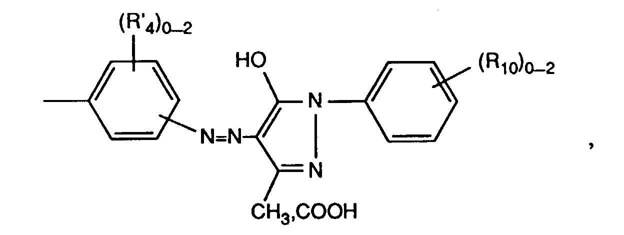 worin (R'₄)₀₋₂, (R₇)₁₋₃, R₈, R₉ und (R₁₀)₀₋₂ jeweils die zuvor angegebene Bedeutung haben, steht oder, vorzugsweise, die Bedeutung von A₁ hat.

Besonders gute färberische Ergebnisse werden erhalten mit Verbindungen der Formel 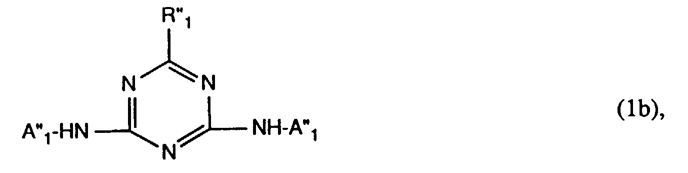 worin R"₁ unsubstituiertes oder im Alkylteil durch Carboxy, Hydroxy oder Methoxy substituiertes N-Mono- oder N,N-Di-C₁-C₂-Alkylamino, Morpholino, Ethylthio, Phenylamino oder o-, m- oder p-Sulfophenylamino bedeutet und A"₁ für einen Rest der Formel 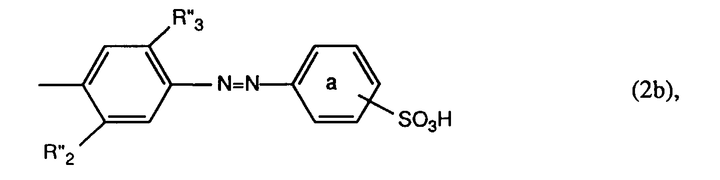 worin R"₂ und R"₃ unabhängig voneinander je Methyl, Methoxy oder Acetylamino bedeuten und der Phenylrest (a) unsubstituiert oder durch C₁-C₄-Alkyl, C₁-C₄-Alkoxy, Chlor, Hydroxy, Carboxy, C₂-C₃-Alkanoylamino und/oder unsubstituiertes oder durch Sulfo, Methyl, Methoxy und/oder Chlor substituiertes Phenylazo weitersubstituiert ist, steht.

Eine besonders bevorzugte Ausführungsform der vorliegenden Erfindung betrifft Verbindungen der Formel 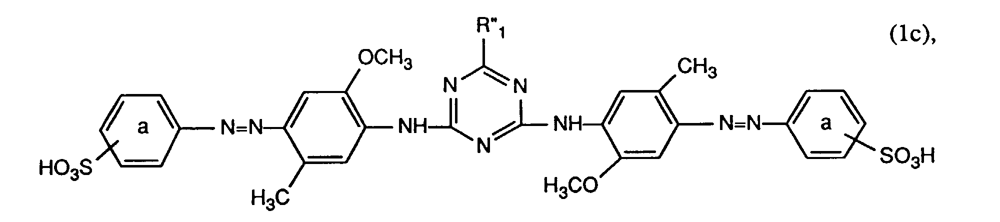 worin R"₁ N-β-Hydroxyethylamino, N,N-Di-β-hydroxyethylamino oder Morpholino bedeutet und der Phenylrest unsubstituiert oder durch Methyl, Methoxy, Acetylamino oder Chlor weitersubstituiert ist.

Das Verfahren zur Herstellung der Verbindungen der zuvor angegebenen Formel (1) ist dadurch gekennzeichnet, dass man eine Verbindung der Formel 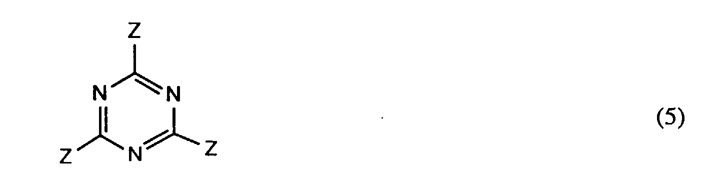 nacheinander in beliebiger Reihenfolge mit einer Verbindung der Formel

A-NHR (6),

einer Verbindung der Formel

A'-NHR' (7)

und einer Verbindung der Formel

R₁-H (8)

umsetzt, worin A, A', R, R' und R₁ jeweils die zuvor angegebene Bedeutung haben und Z Halogen, vorzugsweise Chlor, bedeutet.

Vorzugsweise setzt man die Trihalogenotriazinverbindung der Formel (5) zunächst mit in etwa stöchiometrischen Mengen einer Aminoazoverbindung der Formel (6) bei einer Temperatur von -5 bis 20°C, vorzugsweise 0 bis 5°C um, wobei der pH-Wert durch Zugabe geeigneter Basen, z.B. Ammonium- oder Alkalimetallbasen wie Ammoniak, Lithium-, Natrium- oder Kaliumhydroxid oder Carbonat, neutral bis leicht sauer, vorzugsweise bei 5 bis 7, gehalten wird. Zu dem erhaltenen Reaktionsgemisch werden zweckmässigerweise in etwa stöchiometrische Mengen einer Aminoazoverbindung der Formel (7) gegeben und diese bei leicht erhöhter Temperatur, vorzugsweise bei 30 bis 50°C und einem neutralen bis leicht sauren pH-Wert, der vorzugsweise 6 bis 7 beträgt, mit dem Triazinderivat zur Reaktion gebracht. Handelt es sich bei den Verbindungen der Formeln (6) und (7) um identische Aminoazoverbindungen, so setzt man ca. 2 Aequivalente dieses Aminoazofarbstoffes mit 1 Aequivalent Triazinverbindung um, wobei die Temperatur vorzugsweise zunächst bei -5 bis 20°C gehalten und dann auf ca. 30 bis 50°C erhöht wird.

Eine weitere Möglichkeit besteht darin, die Triazinverbindung der Formel (5) mit einem Gemisch enthaltend sowohl eine Verbindung der Formel (6) als auch eine davon verschiedene Verbindung der Formel (7) umzusetzen, wobei ein Gemisch von einer asymmetrischen Verbindung der Formel 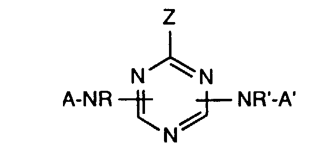 und zwei symmetrischen Verbindungen der Formeln 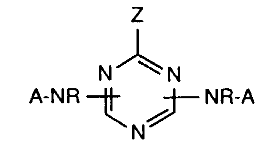 und 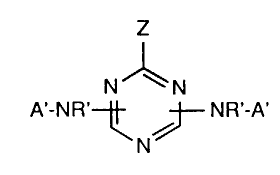 erhalten wird.

Die gemäss den oben beschriebenen Verfahren erhältlichen Triazinylfarbstoffe enthalten noch ein Halogenatom Z, welches durch Reaktion mit einer Verbindung der Formel (8) bei erhöhter Temperatur, vorzugsweise 70 bis 100°C, und einem neutralen bis leicht alkalischen pH-Wert, der je nach eingesetzter Verbindung der Formel (8) z.B. 7 bis 9 beträgt, in eine beliebige Gruppe R₁ umgewandelt werden kann.

Ein weiterer Gegenstand der vorliegenden Erfindung ist die Verwendung der Azofarbstoffe der Formel (1), gegebenenfalls auch Mischungen dieser Verbindungen, zum Färben oder Bedrucken von stickstoffhaltigen und insbesondere cellulosischen Fasermaterialien.

Die erfindungsgemässen Azofarbstoffe der Formel (1) eignen sich also zum Färben und Bedrucken von stickstoffhaltigen oder insbesondere von cellulosischen Fasermaterialien, vorzugsweise von textilen Fasermaterialien, aus Seide, Wolle oder synthetischen Polyamiden, sowie bevorzugt aus den cellulosischen Fasern, wie Rayon, Baumwolle oder Hanf.

Bezüglich ihrer färberischen Eigenschaften können sie als direktziehende oder Direktfarbstoffe (C.I. direct dyes) bezeichnet werden.

Ebenfalls können textile Fasermaterialien aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

Die textilen Fasermaterialien können in den verschiedensten Verarbeitungszuständen vorliegen, wie z.B. als Faser, Garn, Gewebe oder Gewirke.

Neben den textilen Substraten können auch Leder und Papier mit erfindungsgemässen Verbindungen (Farbstoffen) der Formel (1) gefärbt werden.

Man erhält egale Färbungen in gelben Farbtönen mit guten Allgemeinechtheiten, insbesondere guten Reib-, Nass-, Nassreib-, Schweiss- und Lichtechtheiten. Sofern nötig, kann man die Nassechtheiten, insbesondere die Waschechtheit, der erhaltenen Direktfärbungen und -drucke durch eine Nachbehandlung mit sog. Fixiermitteln noch wesentlich verbessern.

Die erfindungsgemässen Farbstoffe der Formel (1) sind gut mit anderen Farbstoffen, insbesondere Dispersionsfarbstoffen kombinierbar. Die erfindungsgemässen Farbstoffe weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 110 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den erfindungsgemässen Farbstoffen der Formel (1) in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie der erfindungsgemässe Farbstoff sie aufweist, so ist es auch möglich Ton-in-Ton-Färbungen zu erhalten.

Mit der Bereitstellung der erfindungsgemässen Farbstoffe der Formel (1) kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die erfindungsgemässen Verbindungen der Formel (1) eignen sich auch zur Herstellung von wässrigen Tinten für den Tintenstrahldruck (ink-jet printing).

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

Beispiel 1: 17,3 Teile 1-Aminobenzol-3-sulfonsäure werden in 100 Teilen Wasser/Eis-Gemisch und 22 Teilen konz. HCl angeschlämmt und bei 0 bis 5°C mit 7 Teilen Natriumnitrit, gelöst in 20 Teilen Wasser, diazotiert. Der Nitritüberschuss wird anschliessend mit Sulfaminsäure zerstört. Die so hergestellte Lösung der Diazoverbindung wird anschliessend zu einer Lösung von 14,2 Teilen 3-Amino-4-methoxytoluol in 120 Teilen Wasser/Eis-Gemisch und 20 ml konz. HCl gegeben, wobei der pH-Wert durch Zugabe von Natriumacetat bei 4,5 bis 5,0 gehalten wird. Man lässt 2 Stunden bei 5-10°C nachrühren und filriert dann den Aminoazofarbstoff ab; dieser wird anschliessend mit 20 % Kochsalzlösung gewaschen und getrocknet 25,7 Teile der so erhaltenen rohen Aminoazoverbindung werden in 300 Teilen Wasser angeschlämmt, auf ca. 5° abgekühlt, durch Zugabe von Natriumhydroxid-Lösung auf pH 7 eingestellt und anschliessend zu einer Suspension von 7,4 Teilen Cyanurchlorid in 100 Teilen Wasser/Eis-Gemisch gegeben. Man lässt 2 Stunden bei 0 bis 10°C rühren, erwärmt dann auf 40°C und lässt anschliessend 5 Stunden bei 40 bis 50°C rühren, wobei der pH-Wert während der gesamten Verrührzeit durch Zugabe von Natriumhydroxid-Lösung auf 6,5 bis 7 gehalten wird. Das Produkt wird mit Kochsalz ausgesalzen, abfiltriert, mit Kochsalzlösung gewaschen und getrocknet. Es resultiert der Farbstoff, der in Form der freien Säure der Formel 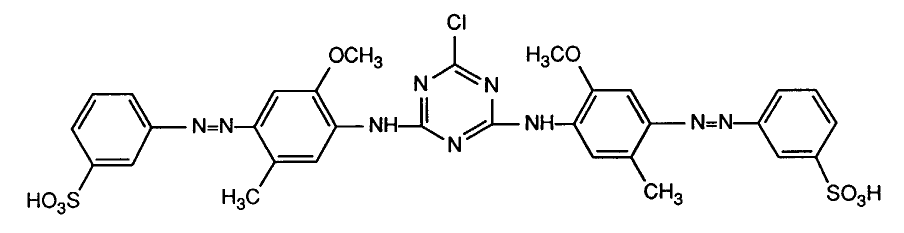 entspricht und Baumwolle in reinen grünstichig-gelben Tönen färbt, wobei die erhaltenen Färbungen gute Licht- und Nassechtheiten aufweisen.

Beispiel 2: 10 Teile des gemäss Beispiel 1 erhaltenen Farbstoffes werden mit 1,2 Teilen Ethanolamin in 250 Teilen Wasser bei einer Temperatur von 90 bis 95°C ca. 6 Stunden lang verrührt, wobei der pH-Wert durch Zugabe von Natriumhydroxid-Lösung bei 7,5 gehalten wird. Das Produkt wird anschliessend ausgesalzen, abfiltriert und getrocknet; es entspricht in Form der freien Säure der Formel 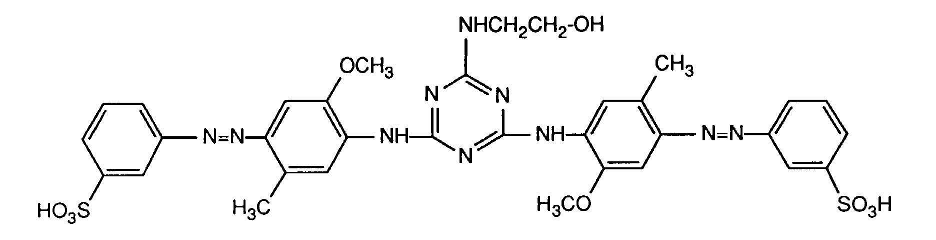 und färbt Baumwolle und Viskose in reinen gelben Tönen mit guten Licht- und Nassechtheiten.

Beispiele 3-25: Analog, wie im Beispiel 1 und 2 beschrieben, lassen sich die in der Tabelle 1 aufgeführten Farbstoffe der allgemeinen Formel 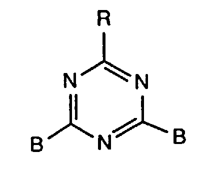 herstellen, die Cellulosematerialien in der angegebenen Nuance mit guten Allgemeinechtheiten färben.

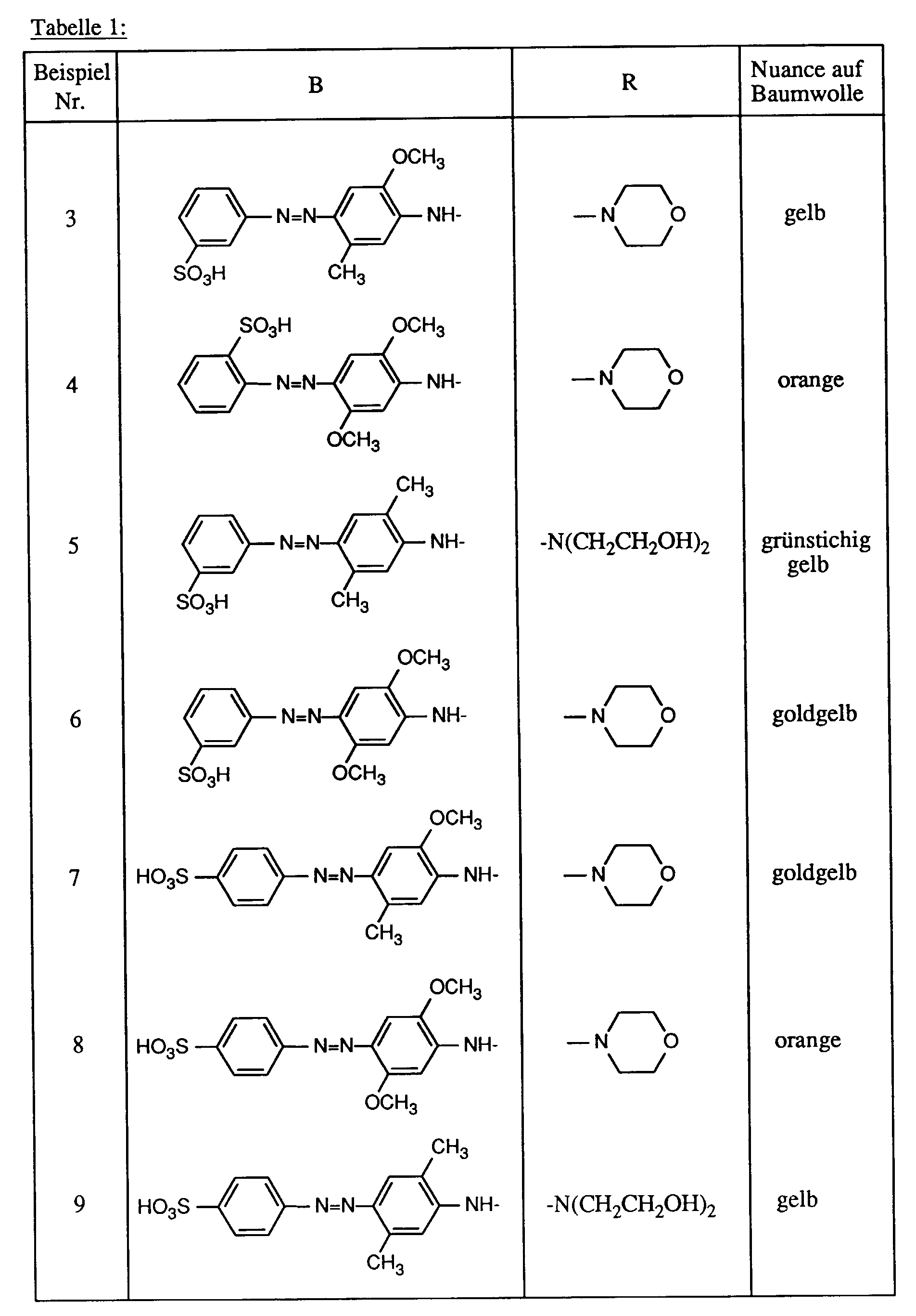

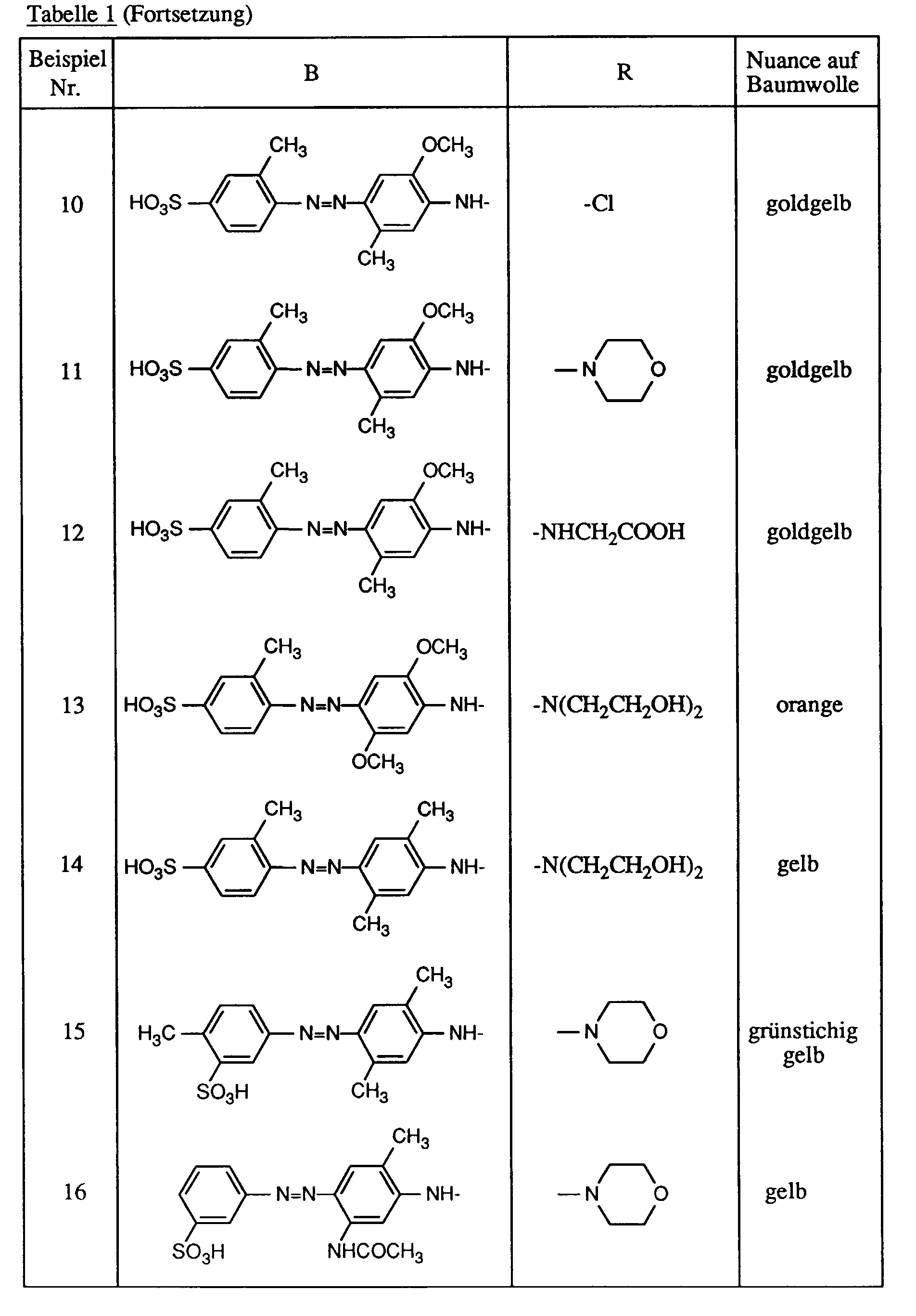

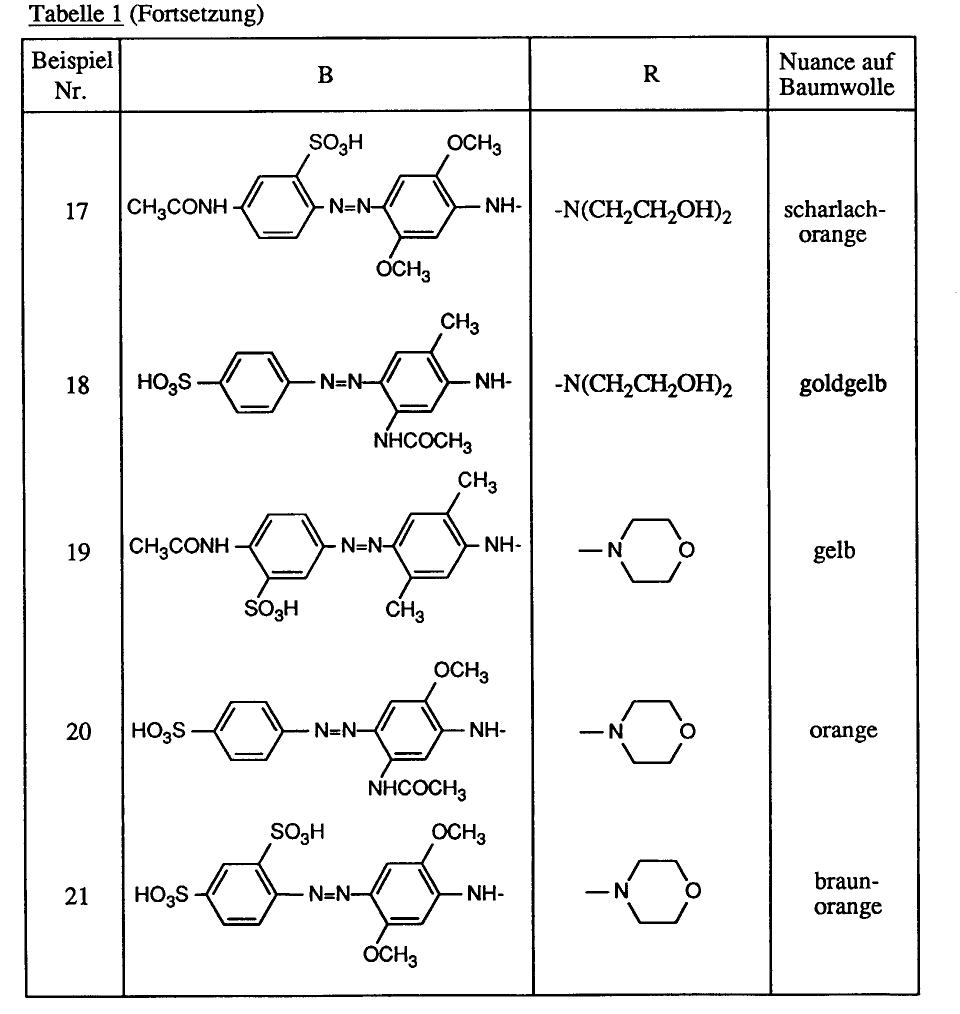

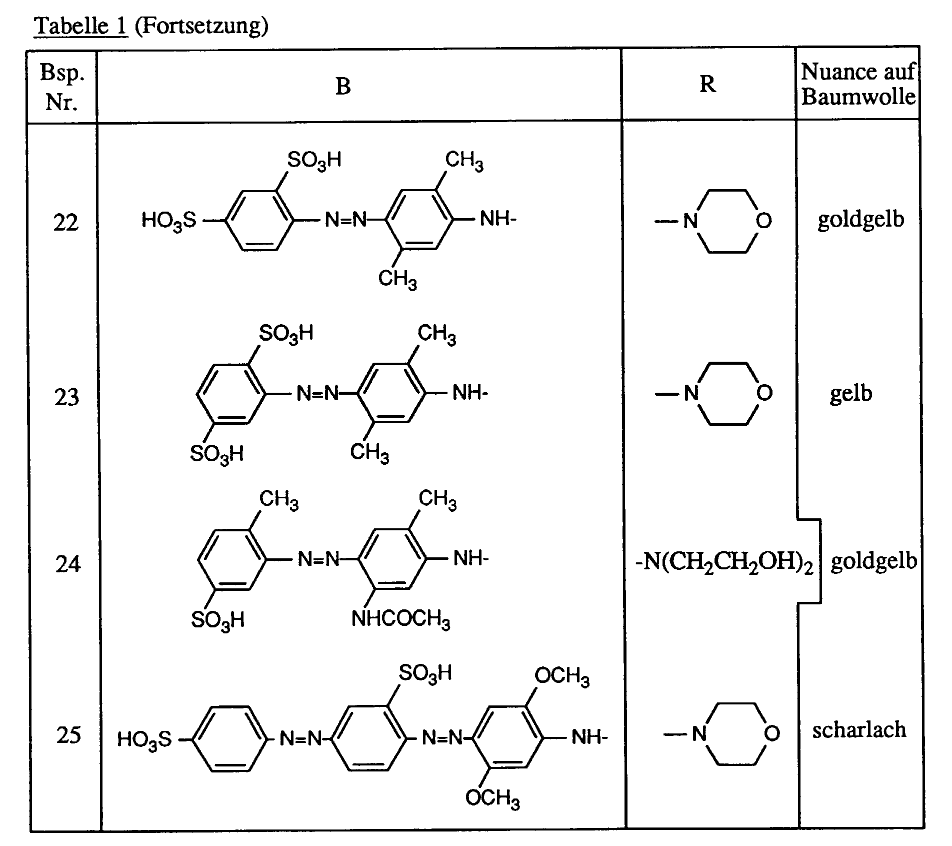

Beispiel 26: 5,5 Teile Cyanurchlorid werden in 50 Teilen Aceton und 300 Teilen eines Wasser/Eis-Gemisches vorgelegt und 9,6 Teile des Aminoazofarbstoffes der Formel 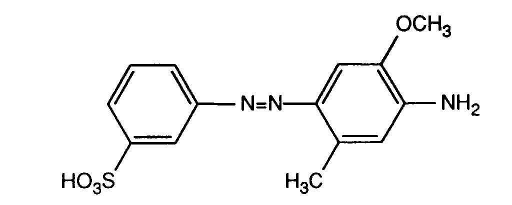 in 300 Teilen Wasser bei einer Temperatur von 0 bis 5°C und pH 7 hinzugegeben. Man lässt anschliessend 3 Stunden bei 0 bis 10°C rühren und hält dabei den pH-Wert durch Zugabe von Natriumhydroxid-Lösung bei 6,5 bis 7,0. Danach werden 7,7 Teile des Aminoazofarbstoffes der Formel 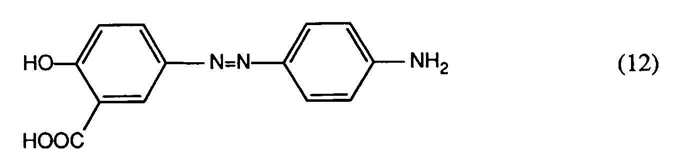 in 100 ml Wasser bei pH 7,0 zum obigen Reaktionsgemisch gegeben. Es folgt ein ca. 6stündiges Rühren bei einer Temperatur von 40 bis 50°C und pH 5, der durch Zugabe von Natriumhydroxid-Lösung konstant gehalten wird. Das Produkt wird danach ausgesalzen, filtriert, mit 20 % Kochsalzlösung gewaschen und getrocknet; es entspricht in Form der freien Säure der Formel 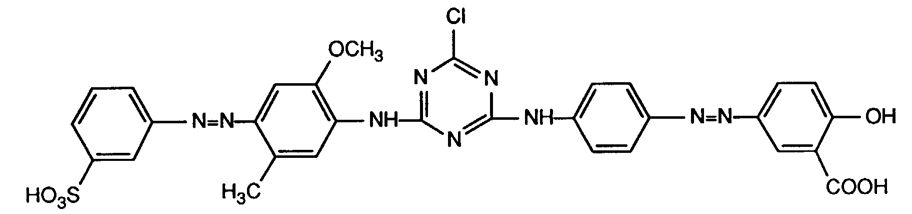 und färbt Baumwolle in reinen grünstichig gelben Tönen mit guten Allgemeinechtheiten.

Beispiel 27: 10,3 Teile der gemäss Beispiel 26 erhaltenen Monochlorverbindung werden in 200 Teilen Wasser angerührt und nach Zugabe von 2,0 Teilen Morpholin auf ca. 95°C erhitzt. Man lässt 6 Stunden bei dieser Temperatur rühren und hält dabei den pH-Wert durch Zugabe von Natriumhydroxid-Lösung auf 7,5. Danach wird das Produkt mit Kochsalz und Ethanol ausgefällt, abfiltriert, mit Kochsalzlösung gewaschen und getrocknet; es entspricht in Form der freien Säure der Formel 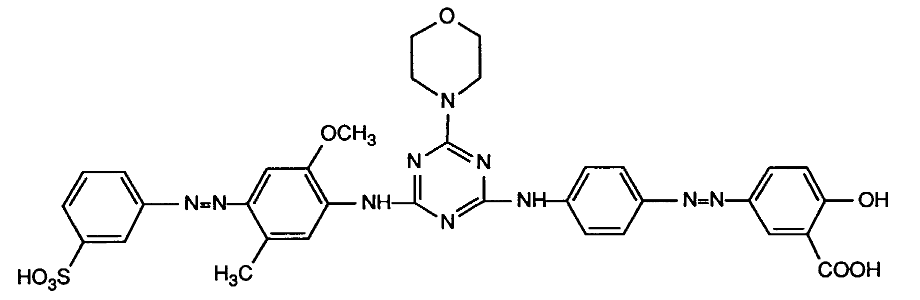 und färbt Baumwolle in reinen grünstichig gelben Tönen mit guten Allgemeinechtheiten.

Beispiele 28-32: Verfährt man wie in den Beispielen 26 und 27 beschrieben und verwendet anstelle des Aminoazofarbstoffes der Formel (12) eine äquivalente Menge der in der Tabelle 2 genannten Aminoazofarbstoffe, so erhält man ebenfalls wertvolle Farbstoffe, die Baumwolle in einer gelben oder orangen Nuance mit guten Allgemeinechtheiten färben.

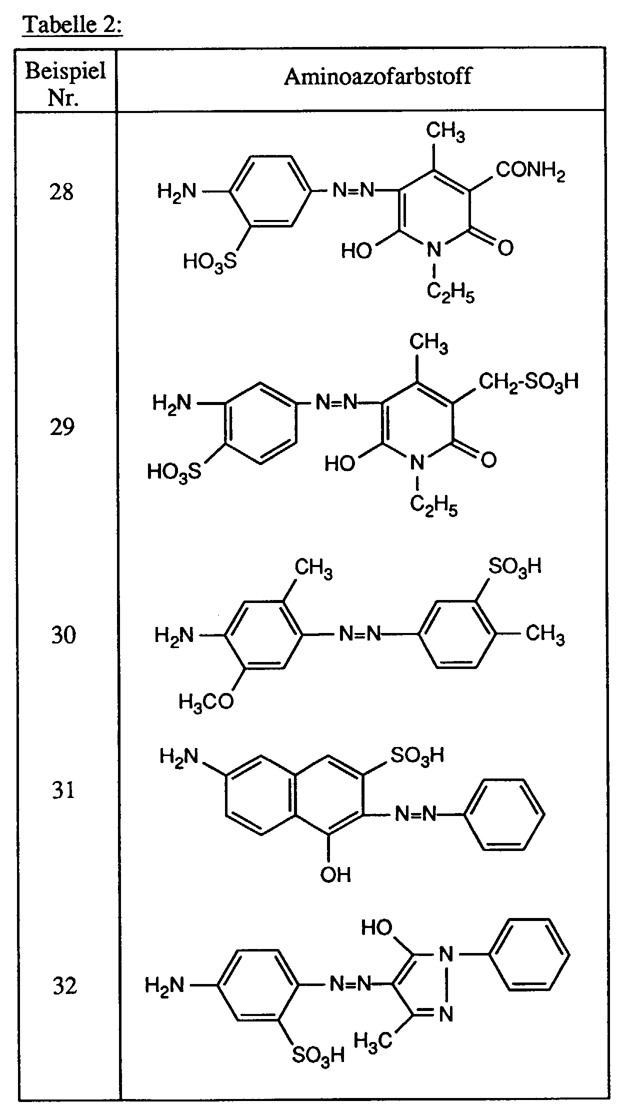

### Färbevorschrift 1

10 Teile Baumwollgewebe (gebleicht und mercerisiert) werden bei ca. 30°C in ein Färbebad eingebracht, welches 200 Teile Wasser und 0,35 Teile Farbstoff des Beispiels 3 enthält. Die Flotte wird innerhalb von 30 Minuten auf 95°C erhitzt und 15 Minuten bei dieser Temperatur belassen. Dann werden 4 Teile Natriumsulfat zugesetzt und noch weitere 45 Minuten bei 95°C gefärbt. Danach wird das Färbebad innerhalb von 15 Minuten auf 80°C abgekühlt und noch 15 Minuten bei dieser Temperatur belassen. Die Färbung wird dann gründlich mit kaltem Wasser gespült und getrocknet.

### Färbevorschrift 2

10 Teile einer Fasermischung aus Polyester und Baumwolle werden bei ca. 50°C in ein Färbebad eingebracht, welches 200 Teile Wasser, ein Farbstoffgemisch bestehend aus 0,2 Teilen C.I. Disperse Yellow 99, 0,2 Teilen C.I. Disperse Blue 60, 0,2 Teilen C.I. Direct Blue 199 und 0,2 Teilen des Farbstoffes gemäss Beispiel 3, 0,4 Teile Ammoniumsulfat sowie 0,2 Teile eines anionischen Dispersionsmittels (z.B. Formaldehyd-Kondensationsprodukt von Naphthalinsulfonsäure) enthält. Das Färbebad wird mit Ameisensäure auf einen pH-Wert von 5,5 eingestellt, 1 Teil Natriumsulfat zugesetzt und dann innerhalb von 45 Minuten auf ca. 130°C aufgeheizt. Man färbt weitere 45 Minuten bei 130°C, kühlt dann das Färbebad innerhalb von 30 Minuten auf ca. 80°C ab und belässt es weitere 45 Minuten bei dieser Temperatur. Die Färbung wird dann gründlich mit kaltem Wasser gespült und getrocknet.

### Färbevorschrift 3

Man verfährt wie in den Färbevorschriften 1 oder 2 beschrieben, gibt jedoch nach Abschluss des Färbevorgangs die kalt gespülte Färbung in ein frisches ca. 30°C warmes Bad, welches 200 Teile Wasser und 0,2-0,6 Teile eines kationischen Nachbehandlungsmittels (Amin-Formaldehyd-Dicyandiamid-Kondensationsprodukt oder Zubereitung auf der Basis von Dicyandiamid und Diäthylentriamin) enthält. Die Färbung wird 30 Minuten bei 30°C nachbehandelt und anschliessend ohne weiteren Spülprozess getrocknet; man erhält eine Färbung mit verbesserten Nassechtheiten.

### Färbevorschrift 4

Man verfährt wie in den Färbevorschriften 1 oder 2 beschrieben, gibt jedoch nach Abschluss des Färbevorgangs die kalt gespülte Färbung in ein frisches ca. 25°C warmes Bad, welches 200 Teile Wasser, 1 Teil Natriumsulfat und 0,6 Teile eines faserreaktiven kationischen Nachbehandlungsmittels auf Basis von N-Methyldialkylamin und Epichlorhydrin enthält. Die Temperatur wird innerhalb von 15 Minuten auf 40°C erhöht, 0,8 Teile 30%ige Natriumhydroxidlösung zugegeben und die Färbung weitere 45 Minuten bei 40°C behandelt. Die Färbung wird schliesslich heiss gespült und getrocknet; sie weist verbesserte Nassechtheiten auf.

## Patentansprüche (Patentansprüche für folgende(n) Vertragsstaat(en): BE, CH, DE, FR, GB, IT, LI)

1. Verbindungen der Formel 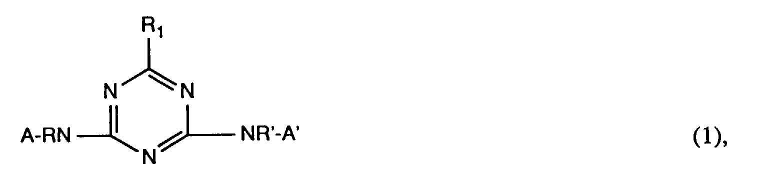 worin A ein Rest der Formel 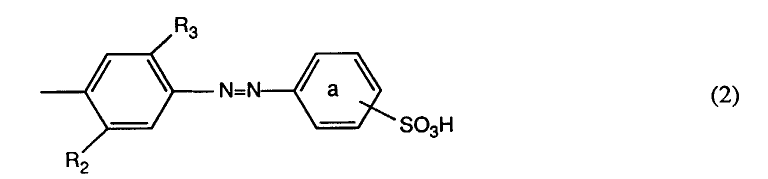 ist, A' die Bedeutung von A hat oder für einen Rest der Formel 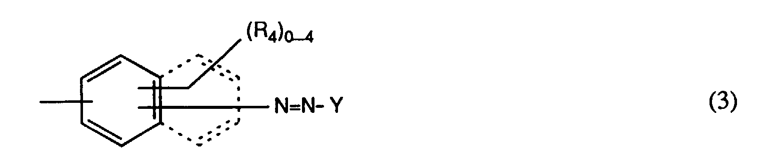 steht, R und R' unabhängig voneinander Wasserstoff oder gegebenenfalls substituiertes C₁-C₄-Alkyl bedeuten,
R₁ Hydroxy, C₁-C₄-Alkoxy, Chlor, Brom, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin- 1-yl ist,
R₂ und R₃ unabhängig voneinander C₁-C₄-Alkyl, C₁-C₄-Alkoxy oder unsubstituiertes oder im Alkylteil durch Hydroxy substituiertes C₂-C₄-Alkanoylamino bedeuten, der Phenylrest (a) keine weiteren Substituenten enthält oder durch C₁-C₄-Alkyl, C₁-C₄-Alkoxy, Halogen, Hydroxy, Carboxy, Sulfo, unsubstituiertes oder durch Hydroxy substituiertes C₂-C₄-Alkanoylamino oder Arylazo weitersubstituiert ist,
(R₄)₀₋₄ für 0 bis 4 gleiche oder verschiedene Reste ausgewählt aus der Gruppe C₁-C₄-Alkyl, C₁-C₄-Alkoxy, Sulfo, Chlor, Carboxy und Hydroxy steht und
Y ein Phenylrest oder der Rest eines 1-Phenylpyrazol-5-ons oder 6-Hydroxypyrid-2-ons ist, wobei die für Y genannten Reste durch C₁-C₄-Alkyl, C₁-C₄-Alkoxy, C₁-C₄-Alkoxy-C₁-C₄-alkyl, gegebenenfalls durch Hydroxy weitersubstituiertes C₂-C₄-Alkanoylamino, Benzoylamino, Amino, unsubstituiertes oder im Alkylteil durch -OH, -OCOCH₃, -OSO₃H, -CN oder Halogen weitersubstituiertes N-Mono- oder N,N-Di-C₁-C₄-Alkylamino, Phenylamino, Mono- oder Di-Sulfobenzylamino, C₁-C₄-Alkoxycarbonyl, C₁-C₄-Alkylsulfonyl, Phenylsulfonyloxy, Trifluormethyl, Nitro, Cyano, Halogen, Carbamoyl, N-Mono- oder N,N-Di-C₁-C₄-Alkylcarbamoyl, Sulfamoyl, N-Mono- oder N,N-Di-C₁-C₄-Alkylsulfamoyl, N-(β-hydroxyethyl)-sulfamoyl, N,N-Di-(β-hydroxyethyl)-sulfamoyl, N-Phenylsulfamoyl, Hydroxy, Carboxy, Sulfo, Sulfomethyl, Ureido oder unsubstituiertes oder durch Sulfo, C₁-C₄-Alkyl, C₁-C₄-Alkoxy, Hydroxy oder Halogen weitersubstituiertes Phenylazo substituiert sein können.

2. Verbindungen gemäss Anspruch 1, dadurch gekennzeichnet, dass R und R' jeweils Wasserstoff bedeuten.

3. Verbindungen gemäss Anspruch 1 oder 2, dadurch gekennzeichnet, dass R₁ Hydroxy, C₁-C₃-Alkoxy, C₁-C₂-Alkylthio, Amino, unsubstituiertes oder im Alkylteil durch Hydroxy, Carboxy, Sulfo, Methoxy oder Ethoxy substituiertes N-Mono- oder N,N-Di-C₁-C₄-Alkylarrtino, unsubstituiertes oder im Phenylteil durch Methyl, Methoxy, Chlor, Carboxy und/oder Sulfo substituiertes Phenylamino, N-C₁-C₄-Alkyl-N-phenylamino oder Morpholino bedeutet.

4. Verbindungen gemäss einem der Ansprüche 1 bis 3, dadurch gekennzeichnet, dass R₁ unsubstituiertes oder im Alkylteil durch Hydroxy, Carboxy oder Methoxy substituiertes N-Mono- oder N,N-Di-C₁-C₂-Alkylamino, Morpholino, Ethylthio, Phenylamino oder o-, m- oder p-Sulfophenylamino bedeutet.

5. Verbindungen gemäss einem der Ansprüche 1 bis 4, dadurch gekennzeichnet, dass R₁ N-β-Hydroxyethylamino, N,N-Di-β-hydroxyethylamino oder Morpholino bedeutet.

6. Verbindungen gemäss einem der Ansprüche 1 bis 5, dadurch gekennzeichnet, dass R₂ und R₃ unabhängig voneinander Methyl, Ethyl, Methoxy, Ethoxy, Acetylamino, Propionylamino oder Hydroxyacetylamino bedeuten.

7. Verbindungen gemäss einem der Ansprüche 1 bis 6, dadurch gekennzeichnet, dass R₂ und R₃ unabhängig voneinander Methyl, Methoxy oder Acetylamino bedeuten.

8. Verbindungen gemäss einem der Ansprüche 1 bis 7, dadurch gekennzeichnet, dass R₂ Methoxy und R₃ Methyl sind.

9. Verbindungen gemäss einem der Ansprüche 1 bis 8, dadurch gekennzeichnet, dass der Phenylrest (a) unsubstituiert oder durch C₁-C₄-Alkyl, C₁-C₄-Alkoxy, Chlor, Hydroxy, Carboxy, C₂-C₃-Alkanoylamino und/oder unsubstituiertes oder durch Sulfo, Methyl, Methoxy und/oder Chlor substituiertes Phenylazo weitersubstituiert ist.

10. Verbindungen gemäss einem der Ansprüche 1 bis 9, dadurch gekennzeichnet, dass der Phenylrest (a) unsubstituiert oder durch Methyl, Methoxy, Acetylamino oder Chlor weitersubstituiert ist.

11. Verbindungen gemäss einem der Ansprüche 1 bis 10, dadurch gekennzeichnet, dass A und A' und R und R' jeweils gleich sind.

12. Verbindungen gemäss einem der Ansprüche 1 bis 11, dadurch gekennzeichnet, dass (R₄)₀₋₄ für 0 bis 4 gleiche oder verschiedene Reste ausgewählt aus der Gruppe Methyl, Methoxy, Chlor, Hydroxy, Carboxy und Sulfo steht.

13. Verbindungen gemäss einem der Ansprüche 1 bis 10 oder 12, dadurch gekennzeichnet, dass A' ein von A verschiedener Rest der Formel 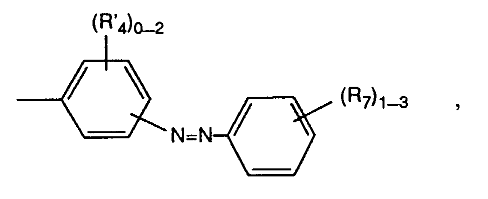 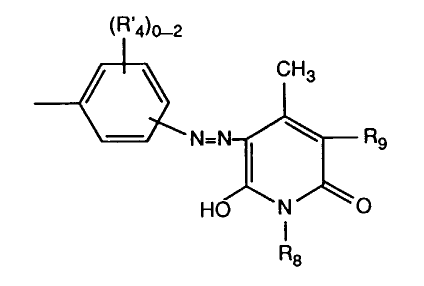 oder 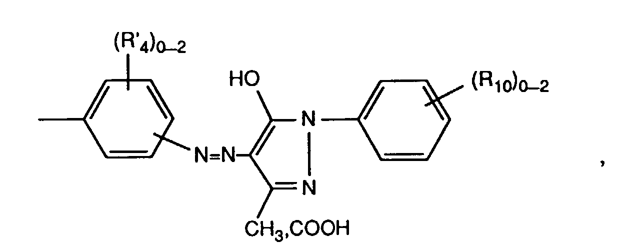 ist, worin (R'₄)₀₋₂ für 0 bis 2 gleiche oder verschiedene Reste ausgewählt aus der Gruppe Methyl, Methoxy, Sulfo, Chlor, Hydroxy und Carboxy steht, (R₇)₁₋₃ 1 bis 3 gleiche oder verschiedene Substituenten ausgewählt aus der Gruppe Sulfo, Methyl, Methoxy, Chlor, Hydroxy, Carboxy und o-, m- oder p-Sulfophenylazo darstellt, R₈ Wasserstoff, C₁-C₄-Alkyl oder C₁-C₄-Alkoxy-C₁-C₄-alkyl bedeutet, R9 Sulfomethyl, Cyano oder Carbamoyl ist und (R₁₀)₀₋₂ für 0 bis 2 gleiche oder verschiedene Reste ausgewählt aus der Gruppe Methyl, Methoxy, Sulfo, Hydroxy, Amino, Acetylamino und Hydroxyacetylamino steht.

14. Verbindungen gemäss Anspruch 1 der Formel 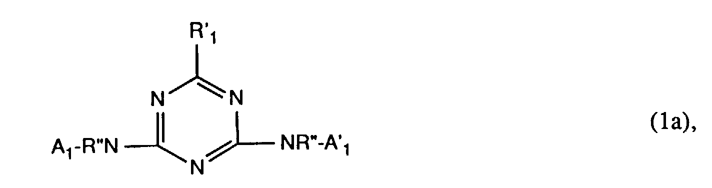 worin R" Wasserstoff, Methyl oder Ethyl bedeutet, R'₁ für Hydroxy, C₁-C₃-Alkoxy, C₁-C₂-Alkylthio, Amino, unsubstituiertes oder im Alkylteil durch Hydroxy, Carboxy, Sulfo, Methoxy oder Ethoxy substituiertes N-Mono- oder N,N-Di-C₁-C₄-Alkylamino, unsubstituiertes oder im Phenylteil durch Methoxy, Methyl, Chlor, Carboxy und/oder Sulfo substituiertes Phenylamino, N-C₁-C₄-Alkyl-N-phenylamino oder Morpholino steht, A₁ ein Rest der Formel 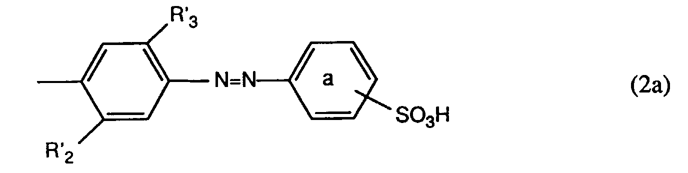 ist, worin R'₂ und R'₃ unabhängig voneinander für Methyl, Ethyl, Methoxy, Ethoxy, Acetylamino, Propionylamino oder Hydroxyacetylamino stehen und der Phenylrest (a) unsubstituiert oder durch C₁-C₄-Alkyl, C₁-C₄-Alkoxy, Halogen, Hydroxy, Carboxy, Sulfo, unsubstituiertes oder durch Hydroxy substituiertes C₂-C₄-Alkanoylamino und/oder Arylazo weitersubstituiert ist, und A'₁ die Bedeutung von A₁ hat oder für einen Rest der Formel 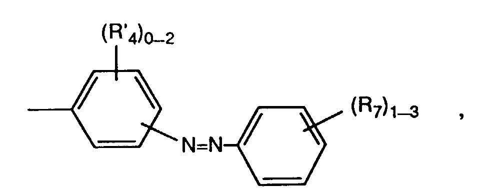 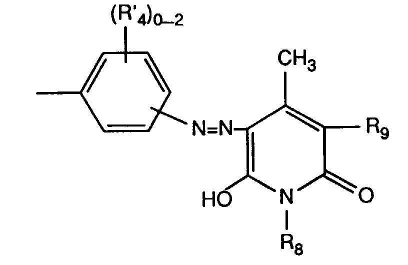 oder 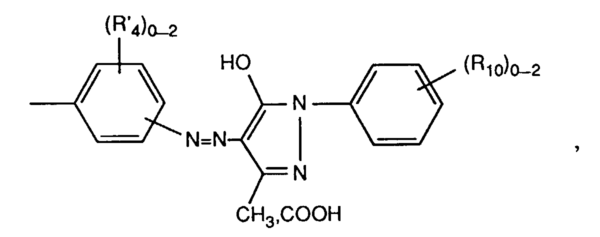 worin (R'₄)₀₋₂, (R₇)₁₋₃, R₈, R₉ und (R₁₀)₀₋₂ jeweils die im Anspruch 13 angegebene Bedeutung haben, steht.

15. Verbindungen gemäss Anspruch 14, dadurch gekennzeichnet, dass die Reste A₁ und A'₁ identisch sind.

16. Verbindungen gemäss Anspruch 1 der Formel 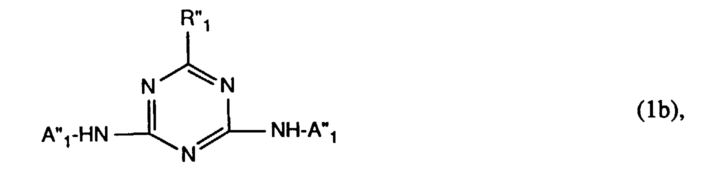 worin R"₁ unsubstituiertes oder im Alkylteil durch Carboxy, Hydroxy oder Methoxy substituiertes N-Mono- oder N,N-Di-C₁-C₂-Alkylamino, Morpholino, Ethylthio, Phenylamino oder o-, m- oder p-Sulfophenylamino bedeutet und A"₁ für einen Rest der Formel 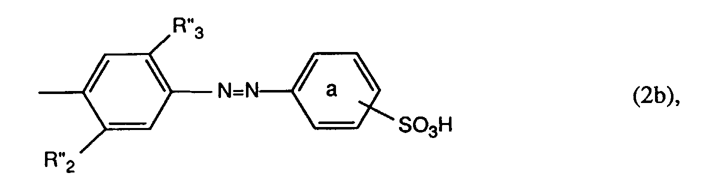 worin R"₂ und R"₃ unabhängig voneinander Methyl, Methoxy oder Acetylamino bedeuten und der Phenylrest (a) unsubstituiert oder durch C₁-C₄-Alkyl, C₁-C₄-Alkoxy, Chlor, Hydroxy, Carboxy, C₂-C₃-Alkanoylamino und/oder unsubstituiertes oder durch Sulfo, Methyl, Methoxy und/oder Chlor substituiertes Phenylazo weitersubstituiert ist, steht.

17. Verbindungen gemäss Anspruch 1 der Formel 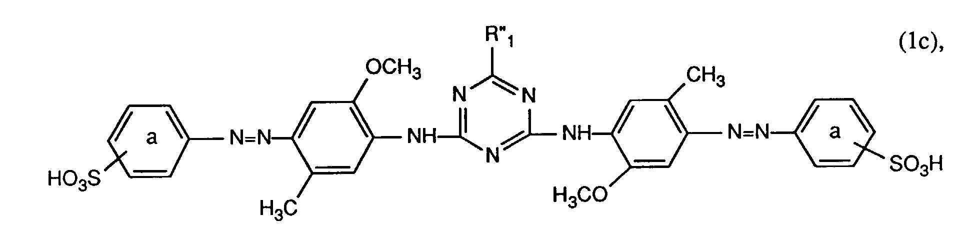 worin R"₁ N-β-Hydroxyethylamino, N,N-Di-β-hydroxyethylamino oder Morpholino bedeutet und der Phenylrest unsubstituiert oder durch Methyl, Methoxy, Acetylamino oder Chlor weitersubstituiert ist.

18. Verfahren zur Herstellung von Verbindungen der Formel (1) gemäss Anspruch 1, dadurch gekennzeichnet, dass man eine Verbindung der Formel 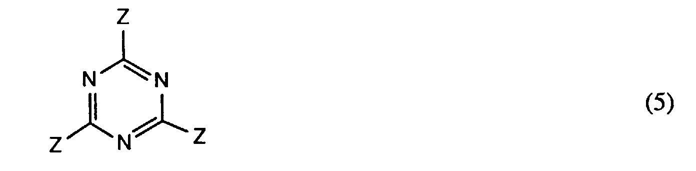 nacheinander in beliebiger Reihenfolge mit einer Verbindung der Formel
A-NHR (6),
einer Verbindung der Formel
A'-NHR' (7)
und einer Verbindung der Formel
R₁-H (8)
umsetzt, worin A, A', R, R' und R₁ jeweils die im Anspruch 1 angegebene Bedeutung haben und Z Halogen, vorzugsweise Chlor, bedeutet

19. Verwendung der Farbstoffe nach einem der Ansprüche 1 bis 17 zum Färben und Bedrucken von stickstoffhaltigen und insbesondere cellulosischen Fasermaterialien.

20. Verwendung nach Anspruch 19, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

21. Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Farbstoffe der Formel (1) gemäss Anspruch 1 verwendet und aus wässriger Flotte bei Temperaturen im Bereich von 100 bis 150°C, vorzugsweise 120 bis 130°C, und einem pH-Wert zwischen 4 und 7,5 färbt.

## Patentansprüche (Patentansprüche für folgende(n) Vertragsstaat(en): ES)

1. Verfahren zur Herstellung von Verbindungen der Formel 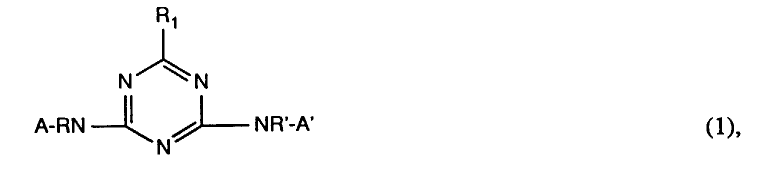 worin A ein Rest der Formel 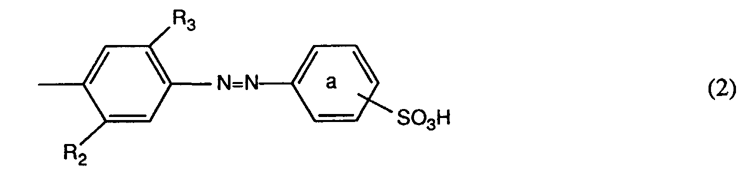 ist, A' die Bedeutung von A hat oder für einen Rest der Formel 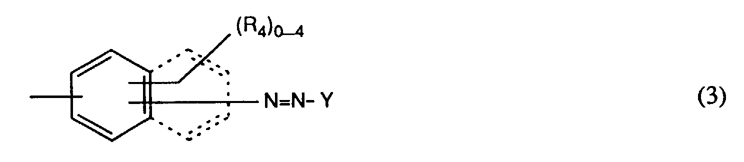 steht, R und R' unabhängig voneinander Wasserstoff oder gegebenenfalls substituiertes C₁-C₄-Alkyl bedeuten,
R₁ Hydroxy, C₁-C₄-Alkoxy, Chlor, Brom, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, Cyclohexylamino, unsubstituiertes oder im Phenylteil durch C₁-C₄-Alkyl, C₁-C₄-Alkoxy, Carboxy, Sulfo und/oder Halogen substituiertes Phenylamino oder N-C₁-C₄-Alkyl-N-phenylamino, Morpholino oder 3-Carboxy- oder 3-Carbamoylpyridin-1-yl ist,
R₂ und R₃ unabhängig voneinander C₁-C₄-Alkyl, C₁-C₄-Alkoxy oder unsubstituiertes oder im Alkylteil durch Hydroxy substituiertes C₂-C₄-Alkanoylamino bedeuten,
der Phenylrest (a) keine weiteren Substituenten enthält oder durch C₁-C₄-Alkyl, C₁-C₄-Alkoxy, Halogen, Hydroxy, Carboxy, Sulfo, unsubstituiertes oder durch Hydroxy substituiertes C₂-C₄-Alkanoylamino oder Arylazo weitersubstituiert ist,
(R₄)₀₋₄ für 0 bis 4 gleiche oder verschiedene Reste ausgewählt aus der Gruppe C₁-C₄-Alkyl, C₁-C₄-Alkoxy, Sulfo, Chlor, Carboxy und Hydroxy steht und
Y ein Phenylrest oder der Rest eines 1-Phenylpyrazol-5-ons oder 6-Hydroxypyrid-2-ons ist, wobei die für Y genannten Reste durch C₁-C₄-Alkyl, C₁-C₄-Alkoxy, C₁-C₄-Alkoxy-C₁-C₄-alkyl, gegebenenfalls durch Hydroxy weitersubstituiertes C₂-C₄-Alkanoylamino, Benzoylamino, Amino, unsubstituiertes oder im Alkylteil durch -OH, -OCOCH₃, -OSO₃H, -CN oder Halogen weitersubstituiertes N-Mono- oder N,N-Di-C₁-C₄-Alkylamino, Phenylamino, Mono- oder Di-Sulfobenzylamino, C₁-C₄-Alkoxycarbonyl, C₁-C₄-Alkylsulfonyl, Phenylsulfonyloxy, Trifluormethyl, Nitro, Cyano, Halogen, Carbamoyl, N-Mono- oder N,N-Di-C₁-C₄-Alkylcarbamoyl, Sulfamoyl, N-Mono- oder N,N-Di-C₁-C₄-Alkylsulfamoyl, N-(β-hydroxyethyl)-sulfamoyl, N,N-Di-(β-hydroxyethyl)-sulfamoyl, N-Phenylsulfamoyl, Hydroxy, Carboxy, Sulfo, Sulfomethyl, Ureido oder unsubstituiertes oder durch Sulfo, C₁-C₄-Alkyl, C₁-C₄-Alkoxy, Hydroxy oder Halogen weitersubstituiertes Phenylazo substituiert sein können,
dadurch gekennzeichnet, dass man eine Verbindung der Formel 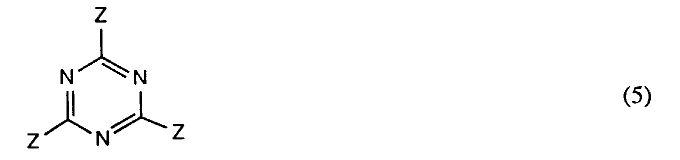 nacheinander in beliebiger Reihenfolge mit einer Verbindung der Formel
A-NHR (6),
einer Verbindung der Formel
A'-NHR' (7)
und einer Verbindung der Formel
R₁-H (8)
umsetzt, worin A, A', R, R' und R₁ jeweils die oben angegebenen Bedeutungen haben und Z Halogen, vorzugsweise Chlor, bedeutet.

2. Verfahren gemäss Anspruch 1, dadurch gekennzeichnet, dass R und R' jeweils Wasserstoff bedeuten.

3. Verfahren gemäss Anspruch 1 oder 2, dadurch gekennzeichnet, dass R₁ Hydroxy, C₁-C₃-Alkoxy, C₁-C₂-Alkylthio, Amino, unsubstituiertes oder im Alkylteil durch Hydroxy, Carboxy, Sulfo, Methoxy oder Ethoxy substituiertes N-Mono- oder N,N-Di-C₁-C₄-Alkylamino, unsubstituiertes oder im Phenylteil durch Methyl, Methoxy, Chlor, Carboxy und/oder Sulfo substituiertes Phenylamino, N-C₁-C₄-Alkyl-N-phenylamino oder Morpholino bedeutet.

4. Verfahren gemäss einem der Ansprüche 1 bis 3, dadurch gekennzeichnet, dass R₁ unsubstituiertes oder im Alkylteil durch Hydroxy, Carboxy oder Methoxy substituiertes N-Mono- oder N,N-Di-C₁-C₂-Alkylamino, Morpholino, Ethylthio, Phenylamino oder o-, m- oder p-Sulfophenylamino bedeutet.

5. Verfahren gemäss einem der Ansprüche 1 bis 4, dadurch gekennzeichnet, dass R₁ N-β-Hydroxyethylamino, N,N-Di-β-hydroxyethylamino oder Morpholino bedeutet.

6. Verfahren gemäss einem der Ansprüche 1 bis 5, dadurch gekennzeichnet, dass R₂ und R₃ unabhängig voneinander Methyl, Ethyl, Methoxy, Ethoxy, Acetylamino, Propionylamino oder Hydroxyacetylamino bedeuten.

7. Verfahren gemäss einem der Ansprüche 1 bis 6, dadurch gekennzeichnet, dass R₂ und R₃ unabhängig voneinander Methyl, Methoxy oder Acetylamino bedeuten.

8. Verfahren gemäss einem der Ansprüche 1 bis 7, dadurch gekennzeichnet, dass R₂ Methoxy und R₃ Methyl sind.

9. Verfahren gemäss einem der Ansprüche 1 bis 8, dadurch gekennzeichnet, dass der Phenylrest (a) unsubstituiert oder durch C₁-C₄-Alkyl, C₁-C₄-Alkoxy, Chlor, Hydroxy, Carboxy, C₂-C₃-Alkanoylamino und/oder unsubstituiertes oder durch Sulfo, Methyl, Methoxy und/oder Chlor substituiertes Phenylazo weitersubstituiert ist.

10. Verfahren gemäss einem der Ansprüche 1 bis 9, dadurch gekennzeichnet, dass der Phenylrest (a) unsubstituiert oder durch Methyl, Methoxy, Acetylamino oder Chlor weitersubstituiert ist.

11. Verfahren gemäss einem der Ansprüche 1 bis 10, dadurch gekennzeichnet, dass A und A' und R und R' jeweils gleich sind.

12. Verfahren gemäss einem der Ansprüche 1 bis 11, dadurch gekennzeichnet, dass (R₄)₀₋₄ für 0 bis 4 gleiche oder verschiedene Reste ausgewählt aus der Gruppe Methyl, Methoxy, Chlor, Hydroxy, Carboxy und Sulfo steht.

13. Verfahren gemäss einem der Ansprüche 1 bis 10 oder 12, dadurch gekennzeichnet, dass A' ein von A verschiedener Rest der Formel 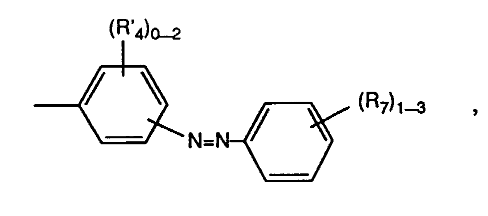 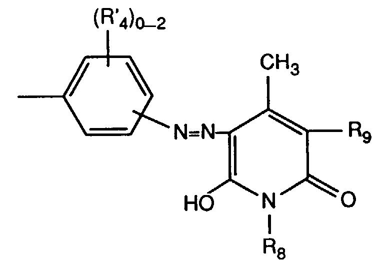 oder 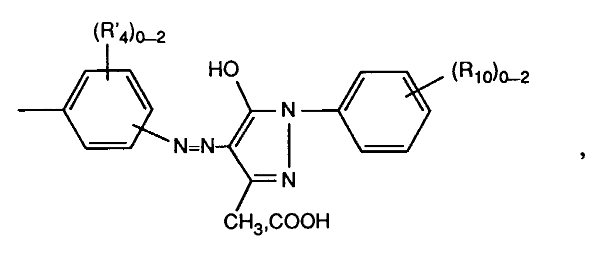 ist, worin (R'₄)₀₋₂ für 0 bis 2 gleiche oder verschiedene Reste ausgewählt aus der Gruppe Methyl, Methoxy, Sulfo, Chlor, Hydroxy und Carboxy steht, (R₇)₁₋₃ 1 bis 3 gleiche oder verschiedene Substituenten ausgewählt aus der Gruppe Sulfo, Methyl, Methoxy, Chlor, Hydroxy, Carboxy und o-, m- oder p-Sulfophenylazo darstellt, R₈ Wasserstoff, C₁-C₄-Alkyl oder C₁-C₄-Alkoxy-C₁-C₄-alkyl bedeutet, R₉ Sulfomethyl, Cyano oder Carbamoyl ist und (R₁₀)₀₋₂ für 0 bis 2 gleiche oder verschiedene Reste ausgewählt aus der Gruppe Methyl, Methoxy, Sulfo, Hydroxy, Amino, Acetylamino und Hydroxyacetylamino steht.

14. Verfahren gemäss Anspruch 1 zur Herstellung von Verbindungen der Formel 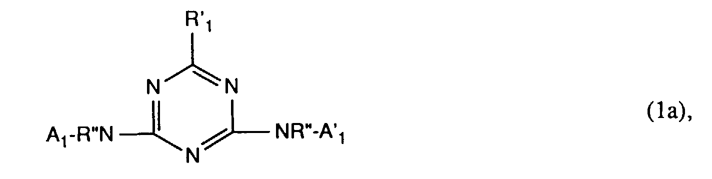 worin R" Wasserstoff, Methyl oder Ethyl bedeutet, R'₁ für Hydroxy, C₁-C₃-Alkoxy, C₁-C₂-Alkylthio, Amino, unsubstituiertes oder im Alkylteil durch Hydroxy, Carboxy, Sulfo, Methoxy oder Ethoxy substituiertes N-Mono- oder N,N-Di-C₁-C₄-Alkylamino, unsubstituiertes oder im Phenylteil durch Methoxy, Methyl, Chlor, Carboxy und/oder Sulfo substituiertes Phenylamino, N-C₁-C₄-Alkyl-N-phenylamino oder Morpholino steht, A₁ ein Rest der Formel 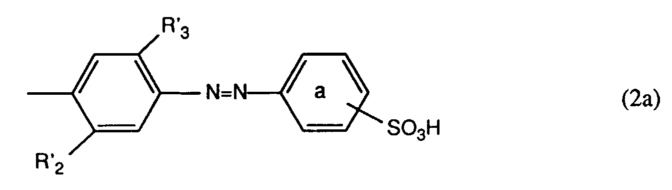 ist, worin R'₂ und R'₃ unabhängig voneinander für Methyl, Ethyl, Methoxy, Ethoxy, Acetylamino, Propionylamino oder Hydroxyacetylamino stehen und der Phenylrest (a) unsubstituiert oder durch C₁-C₄-Alkyl, C₁-C₄-Alkoxy, Halogen, Hydroxy, Carboxy, Sulfo, unsubstituiertes oder durch Hydroxy substituiertes C₂-C₄-Alkanoylamino und/oder Arylazo weitersubstituiert ist, und A'₁ die Bedeutung von A₁ hat oder für einen Rest der Formel 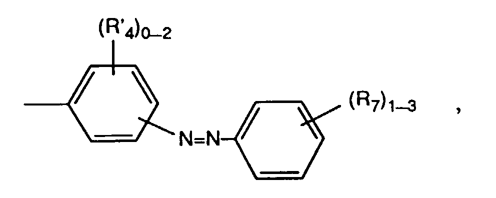 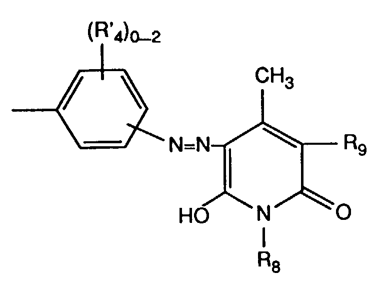 oder 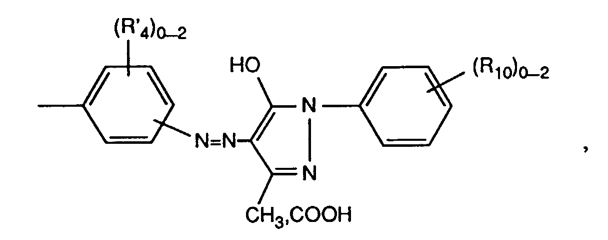 worin (R'₄)₀₋₂, (R₇)₁₋₃, R₈, R₉ und (R₁₀)₀₋₂ jeweils die im Anspruch 13 angegebene Bedeutung haben, steht.

15. Verfahren gemäss Anspruch 14, dadurch gekennzeichnet, dass die Reste A₁ und A'₁ identisch sind.

16. Verfahren gemäss Anspruch 1 zur Herstellung von Verbindungen der Formel 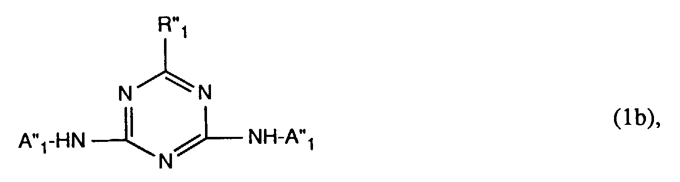 worin R"₁ unsubstituiertes oder im Alkylteil durch Carboxy, Hydroxy oder Methoxy substituiertes N-Mono- oder N,N-Di-C₁-C₂-Alkylamino, Morpholino, Ethylthio, Phenylamino oder o-, m- oder p-Sulfophenylamino bedeutet und A"₁ für einen Rest der Formel 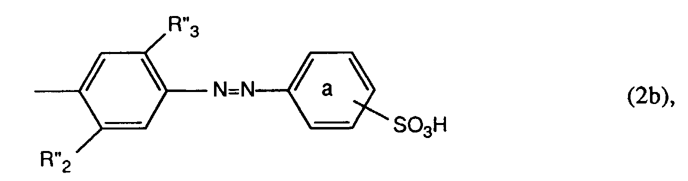 worin R"₂ und R"₃ unabhängig voneinander Methyl, Methoxy oder Acetylamino bedeuten und der Phenylrest (a) unsubstituiert oder durch C₁-C₄-Alkyl, C₁-C₄-Alkoxy, Chlor, Hydroxy, Carboxy, C₂-C₃-Alkanoylamino und/oder unsubstituiertes oder durch Sulfo, Methyl, Methoxy und/oder Chlor substituiertes Phenylazo weitersubstituiert ist, steht.

17. Verfahren gemäss Anspruch 1 zur Herstellung von Verbindungen der Formel 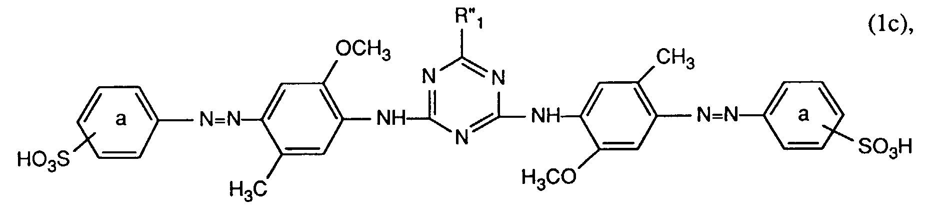 worin R"₁ N-β-Hydroxyethylamino, N,N-Di-β-hydroxyethylamino oder Morpholino bedeutet und der Phenylrest unsubstituiert oder durch Methyl, Methoxy, Acetylamino oder Chlor weitersubstituiert ist.

18. Verwendung der nach einem der Ansprüche 1 bis 17 hergstellten Farbstoffe zum Färben und Bedrucken von stickstoffhaltigen und insbesondere cellulosischen Fasermaterialien.

19. Verwendung nach Anspruch 18, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

20. Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen gemäss Anspruch 1 hergestellte Farbstoffe der Formel (1) verwendet und aus wässriger Flotte bei Temperaturen im Bereich von 100 bis 150°C, vorzugsweise 120 bis 130°C, und einem pH-Wert zwischen 4 und 7,5 färbt.

## Claims (Claims for the following Contracting State(s): BE, CH, DE, FR, GB, IT, LI)

1. A compound of the formula 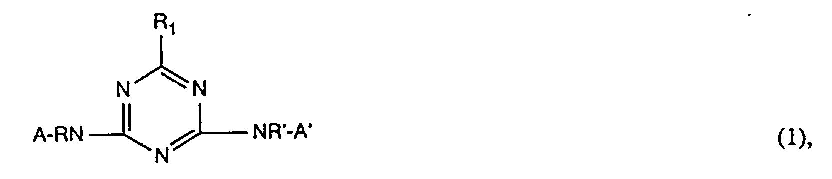 where A is a radical of the formula 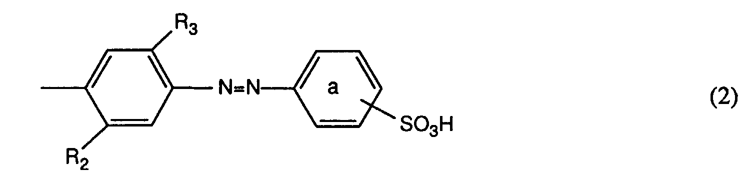 A' has the meaning A or is a radical of the formula 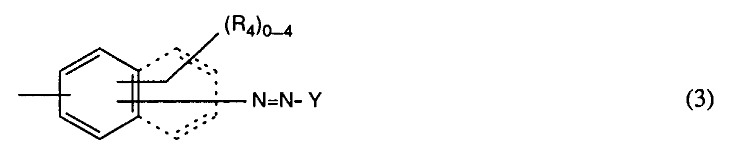 R and R' are each independently of the other hydrogen or substituted or unsubstituted C₁-C₄alkyl, R₁ is hydroxyl, C₁-C₄-alkoxy, chlorine, bromine, C₁-C₄alkylthio, amino, unsubstituted or hydroxyl-, sulfo-, carboxyl- or C₁-C₄alkoxy-substituted (in the alkyl moiety) N-mono- or N,N-di-C₁-C₄alkylamino, cyclohexylamino, unsubstituted or C₁-C₄alkyl-, C₁-C₄alkoxy-, carboxyl-, sulfo- and/or halogen-substituted (in the phenyl moiety) phenylamino or N-C₁-C₄alkyl-N-phenylamino, morpholino or 3-carboxy- or 3-carbamoyl-pyridin-1-yl, R₂ and R₃ are each independently of the other C₁-C₄alkyl, C₁-C₄alkoxy or unsubstituted or hydroxyl-substituted (in the alkyl moiety) C₂-C₄alkanoylamino, the phenyl radical (a) contains no further substituents or is further substituted by C₁-C₄alkyl, C₁-C₄alkoxy, halogen, hydroxyl, carboxyl, sulfo, unsubstituted or hydroxyl-substituted C₂-C₄alkanoylamino or arylazo, (R₄)₀₋₄ represents from 0 to 4 identical or different radicals selected from the group consisting of C₁-C₄alkyl, C₁-C₄alkoxy, sulfo, chlorine, carboxyl and hydroxyl, and Y is a phenyl radical or the radical of a 1-phenylpyrazol-5-one or of a 6-hydroxypyrid-2-one, where the radicals mentioned for Y can be substituted by C₁-C₄alkyl, C₁-C₄alkoxy, C₁-C₄alkoxy-C₁-C₄alkyl, unsubstituted or hydroxyl-substituted C₂-C₄alkanoylamino, benzoylamino, amino, unsubstituted or -OH-, -OCOCH₃-, -OSO₃H-, -CN-, or halogen-substituted (in the alkyl moiety) N-mono- or N,N-di-C₁-C₄alkylamino, phenylamino, mono- or di-sulfobenzylamino, C₁-C₄alkoxycarbonyl, C₁-C₄alkylsulfonyl, phenylsulfonyloxy, trifluoromethyl, nitro, cyano, halogen, carbamoyl, N-mono- or N,N-di-C₁-C₄alkylcarbamoyl, sulfamoyl, N-mono- or N,N-di-C₁-C₄alkylsulfamoyl, N-(β-hydroxyethyl)sulfamoyl, N,N-di(β-hydroxyethyl)sulfamoyl, N-phenylsulfamoyl, hydroxyl, carboxyl, sulfo, sulfomethyl, ureido, or unsubstituted or sulfo-, C₁-C₄alkyl-, C₁-C₄alkoxy-, hydroxyl- or halogen-substituted phenylazo.

2. A compound according to claim 1, wherein R and R' are each hydrogen.

3. A compound as claimed in either of claims 1 and 2, wherein R₁ is hydroxyl, C₁-C₃alkoxy, C₁-C₂alkykthio, amino, unsubstituted or hydroxyl-, carboxyl-, sulfo-, methoxy- or ethoxy-substituted (in the alkyl moiety) N-mono- or N,N-di-C₁-C₄alkylamino, unsubstituted or methyl-, methoxy-, chlorine-, carboxyl- and/or sulfo-substituted (in the phenyl moiety) phenylamino, N-C₁-C₄alkyl-N-phenylamino or morpholino.

4. A compound according to any one of claims 1 to 3, wherein R₁ is unsubstituted or hydroxyl-, carboxyl- or methoxy-substituted (in the alkyl moiety) N-mono- or N,N-di-C₁-C₂alkylamino, morpholino, ethylthio, phenylamino or o-, m- or p-sulfophenylamino.

5. A compound according to any one of claims 1 to 4, wherein R₁ is N-β-hydroxyethylamino, N,N-di-β-hydroxyethylamino or morpholino.

6. A compound according to any one of claims 1 to 5, wherein R₂ and R₃ are each independently of the other methyl, ethyl, methoxy, ethoxy, acetylamino, propionylamino or hydroxyacetylamino.

7. A compound according to any one of claims 1 to 6, wherein R₂ and R₃ are each independently of the other methyl, methoxy or acetylamino.

8. A compound according to any one of claims 1 to 7, wherein R₂ is methoxy and R₃ is methyl.

9. A compound according to any one of claims 1 to 8, wherein the phenyl radical (a) is unsubstituted or further substituted by C₁-C₄alkyl, C₁-C₄alkoxy, chlorine, hydroxyl, carboxyl, C₂-C₃alkanoylamino and/or unsubstituted or sulfo-, methyl-, methoxy- and/or chlorine-substituted phenylazo.

10. A compound according to any one of claims 1 to 9, wherein the phenyl radical (a) is unsubstituted or further substituted by methyl, methoxy, acetylamino or chlorine.

11. A compound according to any one of claims 1 to 10, wherein A and A' and R and R' are each identical.

12. A compound according to any one of claims 1 to 11, wherein (R₄)₀₋₄ represents from 0 to 4 identical or different radicals selected from the group consisting of methyl, methoxy, chlorine, hydroxyl, carboxyl and sulfo.

13. A compound according to any one of claims 1 to 10 or 12, wherein A' as a radical other than A conforms to the formula 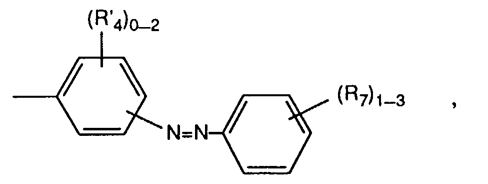 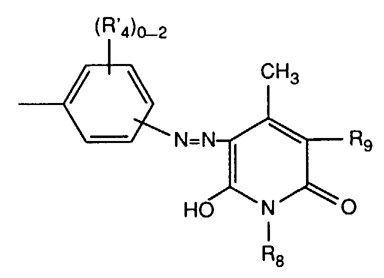 or 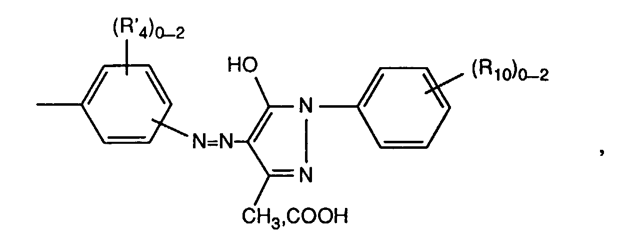 where (R'₄)₀₋₂ represents from 0 to 2 identical or different radicals selected from the group consisting of methyl, methoxy, sulfo, chlorine, hydroxyl and carboxyl, (R₇)₁₋₃ represents from 1 to 3 identical or different substituents selected from the group consisting of sulfo, methyl, methoxy, chlorine, hydroxyl, carboxyl and o-, m- or p-sulfophenylazo, R₈ is hydrogen, C₁-C₄alkyl or C₁-C₄alkoxy-C₁-C₄alkyl, R₉ is sulfomethyl, cyano or carbamoyl, and (R₁₀)₀₋₂ represents from 0 to 2 identical or different radicals selected from the group consisting of methyl, methoxy, sulfo, hydroxyl, amino, acetylamino and hydroxyacetylamino.

14. A compound according to claim 1 of the formula 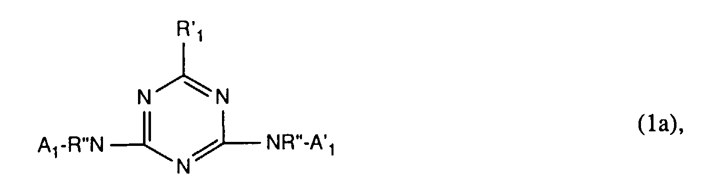 where R" is hydrogen, methyl or ethyl, R'₁ is hydroxyl, C₁-C₃alkoxy, C₁-C₂alkylthio, amino, unsubstituted or hydroxyl-, carboxyl-, sulfo-, methoxy- or ethoxy-substituted (in the alkyl moiety) N-mono- or N,N-di-C₁-C₄alkylamino, unsubstituted or methoxy-, methyl-, chlorine-, carboxyl- and/or sulfo-substituted (in the phenyl moiety) phenylamino, N-C₁-C₄alkyl-N-phenylamino or morpholino, A₁ is a radical of the formula 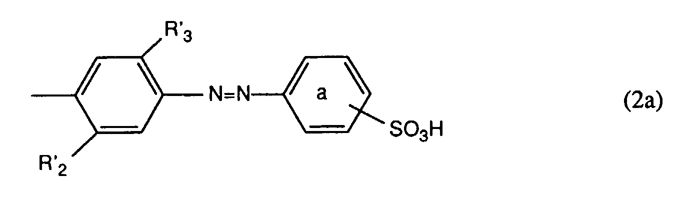 where R'₂ and R'₃ are each independently of the other methyl, ethyl, methoxy, ethoxy, acetylamino, propionylamino or hydroxyacetylamino, and the phenyl radical (a) is unsubstituted or further substituted by C₁-C₄alkyl, C₁-C₄alkoxy, halogen, hydroxyl, carboxyl, sulfo, unsubstituted or hydroxyl-substituted C₂-C₄alkanoylamino and/or arylazo, and A'₁ has the meaning A₁ or is a radical of the formula 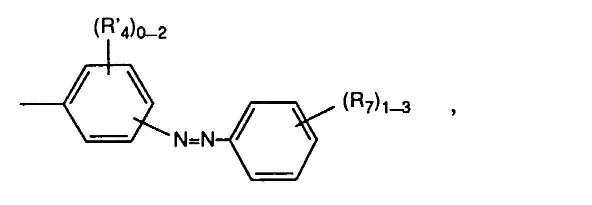 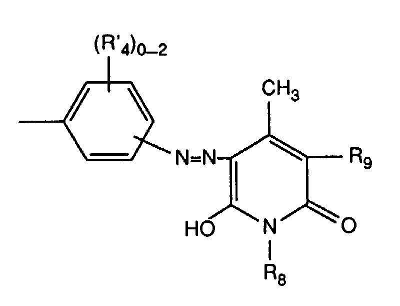 or 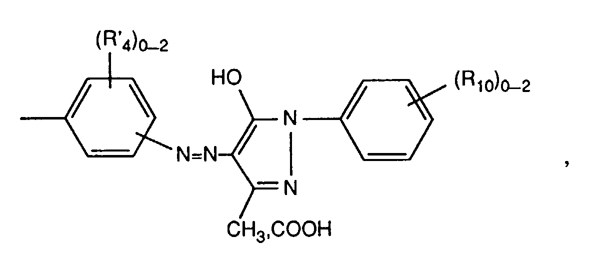 where (R'₄)₀₋₂, (R₇)₁₋₃, R₈, R₉ and (R₁₀)₀₋₂ are each as defined in claim 13.

15. A compound according to claim 14, wherein A₁ and A'₁ are identical radicals.

16. A compound according to claim 1 of the formula 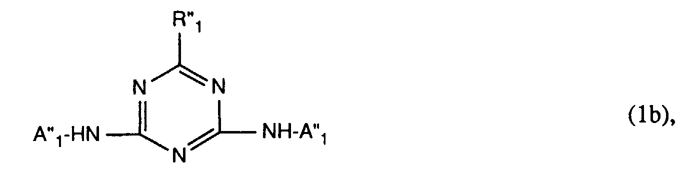 where R"₁ is unsubstituted or carboxyl-, hydroxyl- or methoxy-substituted (in the alkyl moiety) N-mono- or N,N-di-C₁-C₂alkylamino, morpholino, ethylthio, phenylamino or o-, m- or p-sulfophenylamino, and A"₁ is a radical of the formula 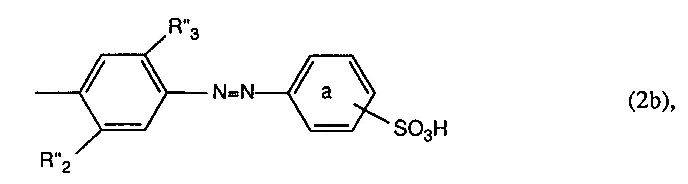 where R"₂ and R"₃ are each independently of the other methyl, methoxy or acetylamino, and the phenyl radical (a) is unsubstituted or further substituted by C₁-C₄alkyl, C₁-C₄alkoxy, chlorine, hydroxyl, carboxyl, C₂-C₃alkanoylamino and/or unsubstituted or sulfo-, methyl-, methoxy- and/or chlorine-substituted phenylazo.

17. A compound according to claim 1 of the formula 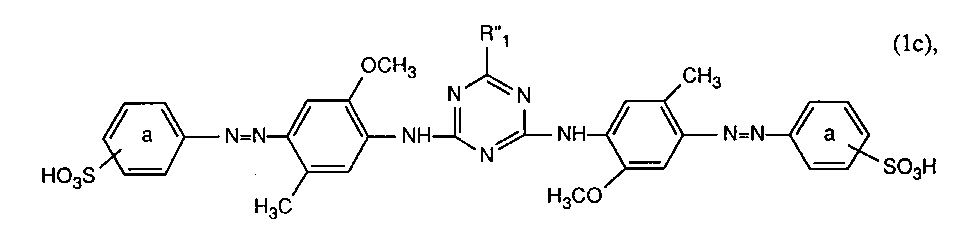 where R"₁ is N-β-hydroxyethylamino, N,N-di-β-hydroxyethylamino or morpholino, and the phenyl radical is unsubstituted or further substituted by methyl, methoxy, acetylamino or chlorine.

18. A process for preparing a compound of the formula (1) according to claim 1, which comprises reacting a compound of the formula 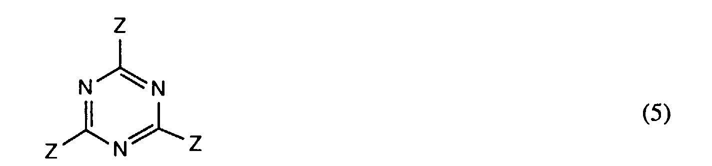 in succession in any desired order with a compound of the formula
A-NHR (6),
a compound of the formula
A'-NHR' (7)
and a compound of the formula
R₁-H (8)
where A, A', R, R' and R₁ are each as defined in claim 1 and Z is halogen, preferably chlorine.

19. The use of a dye according to any one of claims 1 to 17 for dyeing and printing nitrogen-containing and in particular cellulosic fibre materials.

20. A use according to claim 19, wherein blends of synthetic fibres and cellulosic fibre materials, in particular polyester/cotton blend fabrics, are dyed in the presence of a disperse dye for the polyester fibres under the dyeing conditions for polyester fibres.

21. A process for dyeing polyester/cotton blend fabrics with disperse and direct dyes, which comprises using in a single-stage, single-bath process in addition to the disperse dyes dyes of the formula (1) according to claim 1 and dyeing from an aqueous liquor at temperatures within the range from 100 to 150°C, preferably from 120 to 130°C, and at a pH between 4 and 7.5.

## Claims (Claims for the following Contracting State(s): ES)

1. A process for preparing a compound of the formula 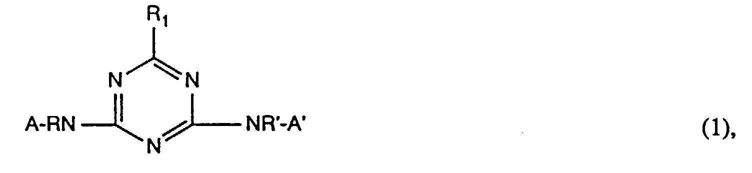 where A is a radical of the formula 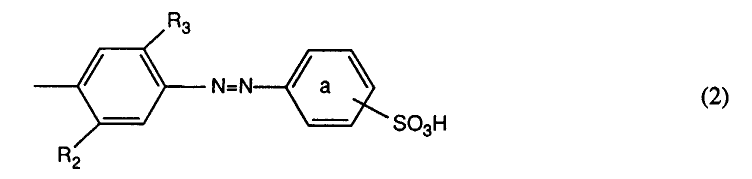 A' has the meaning A or is a radical of the formula 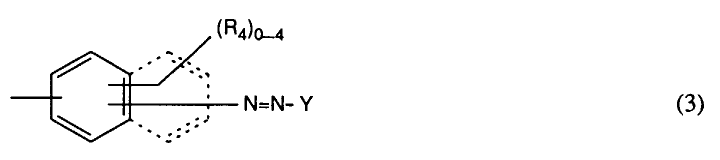 R and R' are each independently of the other hydrogen or substituted or unsubstituted C₁-C₄alkyl, R₁ is hydroxyl, C₁-C₄alkoxy, chlorine, bromine, C₁-C₄alkylthio, amino, unsubstituted or hydroxyl-, sulfo-, carboxyl- or C₁-C₄alkoxy-substituted (in the alkyl moiety) N-mono- or N,N-di-C₁-C₄alkylamino, cyclohexylamino, unsubstituted or C₁-C₄alkyl-, C₁-C₄alkoxy-, carboxyl-, sulfo- and/or halogen-substituted (in the phenyl moiety) phenylamino or N-C₁-C₄alkyl-N-phenylamino, morpholino or 3-carboxy- or 3-carbamoyl-pyridin-1-yl, R₂ and R₃ are each independently of the other C₁-C₄alkyl, C₁-C₄alkoxy or unsubstituted or hydroxyl-substituted (in the alkyl moiety) C₂-C₄alkanoylamino, the phenyl radical (a) contains no further substituents or is further substituted by C₁-C₄alkyl, C₁-C₄alkoxy, halogen, hydroxyl, carboxyl, sulfo, unsubstituted or hydroxyl-substituted C₂-C₄alkanoylamino or arylazo, (R₄)₀₋₄ represents from 0 to 4 identical or different radicals selected from the group consisting of C₁-C₄alkyl, C₁-C₄alkoxy, sulfo, chlorine, carboxyl and hydroxyl, and Y is a phenyl radical or the radical of a 1-phenylpyrazol-5-one or of a 6-hydroxypyrid-2-one, where the radicals mentioned for Y can be substituted by C₁-C₄alkyl, C₁-C₄alkoxy, C₁-C₄alkoxy-C₁-C₄alkyl, unsubstituted or hydroxyl-substituted C₂-C₄alkanoylamino, benzoylamino, amino, unsubstituted or -OH-, -OCOCH₃-, -OSO₃H-, -CN-, or halogen-substituted (in the alkyl moiety) N-mono- or N,N-di-C₁-C₄alkylamino, phenylamino, mono- or di-sulfobenzylamino, C₁-C₄alkoxycarbonyl, C₁-C₄alkylsulfonyl, phenylsulfonyloxy, trifluoromethyl, nitro, cyano, halogen, carbamoyl, N-mono- or N,N-di-C₁-C₄alkylcarbamoyl, sulfamoyl, N-mono- or N,N-di-C₁-C₄alkylsulfamoyl, N-(β-hydroxyethyl)sulfamoyl, N,N-di(β-hydroxyethyl)sulfamoyl, N-phenylsulfamoyl, hydroxyl, carboxyl, sulfo, sulfomethyl, ureido, or unsubstituted or sulfo-, C₁-C₄alkyl-, C₁-C₄alkoxy-, hydroxyl- or halogen-substituted phenylazo, which comprises reacting a compound of the formula 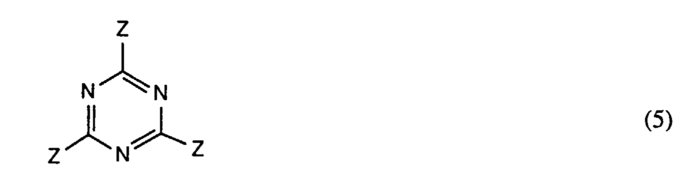 in succession in any desired order with a compound of the formula
A-NHR (6),
a compound of the formula
A'-NHR' (7)
and a compound of the formula
R₁-H (8)
where A, A', R, R' and R₁ are each as defined above and Z is halogen, preferably chlorine.

2. A process according to claim 1, wherein R and R' are each hydrogen.

3. A process as claimed in either of claims 1 and 2, wherein R₁ is hydroxyl, C₁-C₃alkoxy, C₁-C₂alkylthio, amino, unsubstituted or hydroxyl-, carboxyl-, sulfo-, methoxy- or ethoxy-substituted (in the alkyl moiety) N-mono- or N,N-di-C₁-C₄alkylamino, unsubstituted or methyl-, methoxy-, chlorine-, carboxyl- and/or sulfo-substituted (in the phenyl moiety) phenylamino, N-C₁-C₄alkyl-N-phenylamino or morpholino.

4. A process according to any one of claims 1 to 3, wherein R₁ is unsubstituted or hydroxyl-, carboxyl- or methoxy-substituted (in the alkyl moiety) N-mono- or N,N-di-C₁-C₂alkylamino, morpholino, ethylthio, phenylamino or o-, m- or p-sulfophenylamino.

5. A process according to any one of claims 1 to 4, wherein R₁ is N-β-hydroxyethylamino, N,N-di-β-hydroxyethylamino or morpholino.

6. A process according to any one of claims 1 to 5, wherein R₂ and R₃ are each independently of the other methyl, ethyl, methoxy, ethoxy, acetylamino, propionylamino or hydroxyacetylamino.

7. A process according to any one of claims 1 to 6, wherein R₂ and R₃ are each independently of the other methyl, methoxy or acetylamino.

8. A process according to any one of claims 1 to 7, wherein R₂ is methoxy and R₃ is methyl.

9. A process according to any one of claims 1 to 8, wherein the phenyl radical (a) is unsubstituted or further substituted by C₁-C₄alkyl, C₁-C₄alkoxy, chlorine, hydroxyl, carboxyl, C₂-C₃alkanoylamino and/or unsubstituted or sulfo-, methyl-, methoxy- and/or chlorine-substituted phenylazo.

10. A process according to any one of claims 1 to 9, wherein the phenyl radical (a) is unsubstituted or further substituted by methyl, methoxy, acetylamino or chlorine.

11. A process according to any one of claims 1 to 10, wherein A and A' and R and R' are each identical.

12. A process according to any one of claims 1 to 11, wherein (R₄)₀₋₄ represents from 0 to 4 identical or different radicals selected from the group consisting of methyl, methoxy, chlorine, hydroxyl, carboxyl and sulfo.

13. A process according to any one of claims 1 to 10 or 12, wherein A' as a radical other than A conforms to the formula 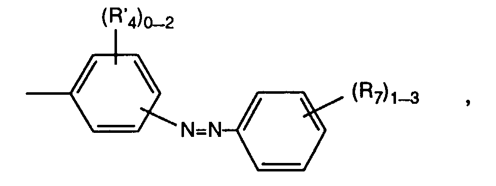 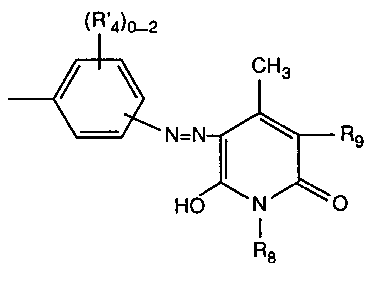 or 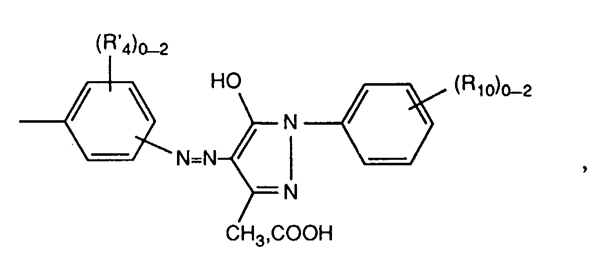 where (R'₄)₀₋₂ represents from 0 to 2 identical or different radicals selected from the group consisting of methyl, methoxy, sulfo, chlorine, hydroxyl and carboxyl, (R₇)₁₋₃ represents from 1 to 3 identical or different substituents selected from the group consisting of sulfo, methyl, methoxy, chlorine, hydroxyl, carboxyl and o-, m- or p-sulfophenylazo, R₈ is hydrogen, C₁-C₄alkyl or C₁-C₄alkoxy-C₁-C₄alkyl, R₉ is sulfomethyl, cyano or carbamoyl, and (R₁₀)₀₋₂ represents from 0 to 2 identical or different radicals selected from the group consisting of methyl, methoxy, sulfo, hydroxyl, amino, acetylamino and hydroxyacetylamino.

14. A process according to claim 1 for preparing a compound of the formula 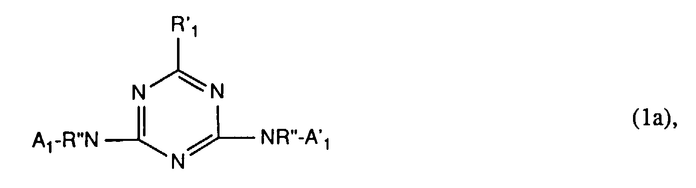 where R" is hydrogen, methyl or ethyl, R'₁ is hydroxyl, C₁-C₃alkoxy, C₁-C₂alkylthio, amino, unsubstituted or hydroxyl-, carboxyl-, sulfo-, methoxy- or ethoxy-substituted (in the alkyl moiety) N-mono- or N,N-di-C₁-C₄alkylamino, unsubstituted or methoxy-, methyl-, chlorine-, carboxyl- and/or sulfo-substituted (in the phenyl moiety) phenylamino, N-C₁-C₄alkyl-N-phenylamino or morpholino, A₁ is a radical of the formula 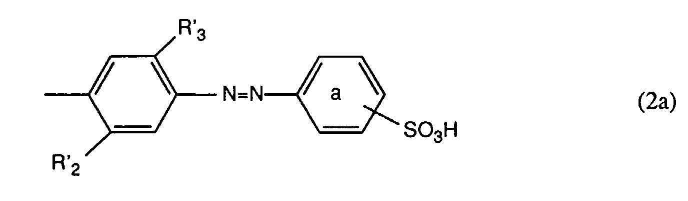 where R'₂ and R'₃ are each independently of the other methyl, ethyl, methoxy, ethoxy, acetylamino, propionylamino or hydroxyacetylamino, and the phenyl radical (a) is unsubstituted or further substituted by C₁-C₄alkyl, C₁-C₄alkoxy, halogen, hydroxyl, carboxyl, sulfo, unsubstituted or hydroxyl-substituted C₂-C₄alkanoylamino and/or arylazo, and A'₁ has the meaning A₁ or is a radical of the formula 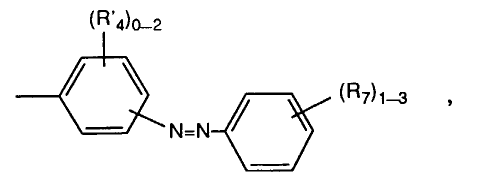 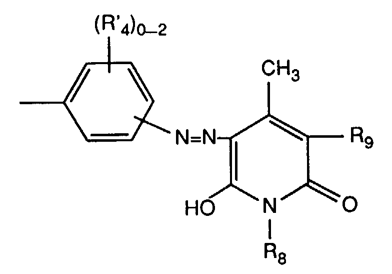 or 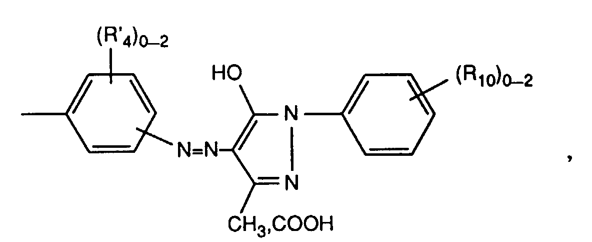 where (R'₄)₀₋₂, (R₇)₁₋₃, R₈, R₉ and (R₁₀)₀₋₂ are each as defined in claim 13.

15. A process according to claim 14, wherein A₁ and A'₁ are identical radicals.

16. A process according to claim 1 for preparing a compound of the formula 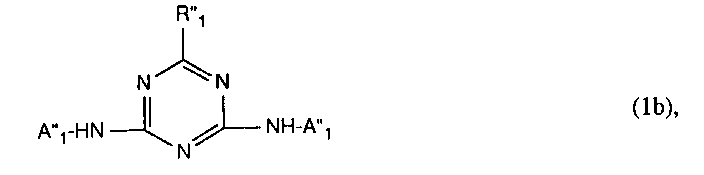 where R"₁ is unsubstituted or carboxyl-, hydroxyl- or methoxy-substituted (in the alkyl moiety) N-mono- or N,N-di-C₁-C₂alkylamino, morpholino, ethylthio, phenylamino or o-, m- or p-sulfophenylamino, and A"₁ is a radical of the formula 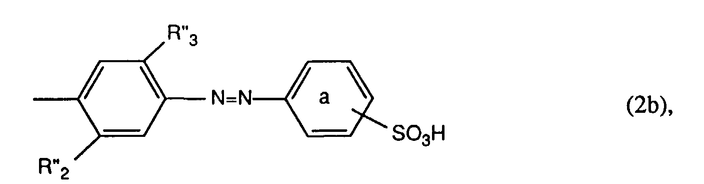 where R"₂ and R"₃ are each independently of the other methyl, methoxy or acetylamino, and the phenyl radical (a) is unsubstituted or further substituted by C₁-C₄alkyl, C₁-C₄alkoxy, chlorine, hydroxyl, carboxyl, C₂-C₃alkanoylamino and/or unsubstituted or sulfo-, methyl-, methoxy- and/or chlorine-substituted phenylazo.

17. A process according to claim 1 for preparing a compound of the formula 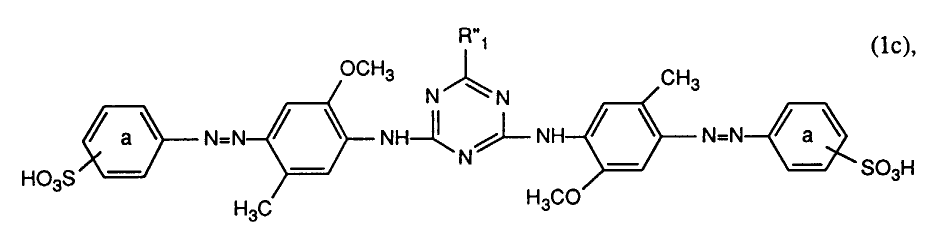 where R"₁ is N-β-hydroxyethylamino, N,N-di-β-hydroxyethylamino or morpholino, and the phenyl radical is unsubstituted or further substituted by methyl, methoxy, acetylamino or chlorine.

18. The use of a dye prepared according to any one of claims 1 to 17 for dyeing and printing nitrogen-containing and in particular cellulosic fibre materials.

19. A use according to claim 18, wherein blends of synthetic fibres and cellulosic fibre materials, in particular polyester/cotton blend fabrics, are dyed in the presence of a disperse dye for the polyester fibres under the dyeing conditions for polyester fibres.

20. A process for dyeing polyester/cotton blend fabrics with disperse and direct dyes, which comprises using in a single-stage, single-bath process in addition to the disperse dyes dyes of the formula (1) prepared according to claim 1 and dyeing from an aqueous liquor at temperatures within the range from 100 to 150°C, preferably from 120 to 130°C, and at a pH between 4 and 7.5.

## Revendications (Revendications pour l'(les) Etat(s) contractant(s) suivant(s): BE, CH, DE, FR, GB, IT, LI)

1. Composés de formule 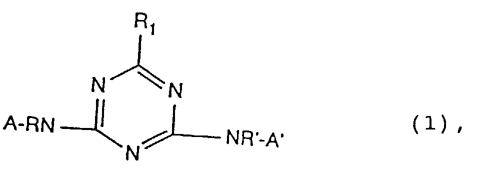 où A représente un reste de formule 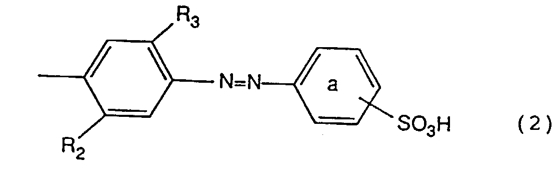 A' a la signification de A ou bien représente un reste de formule 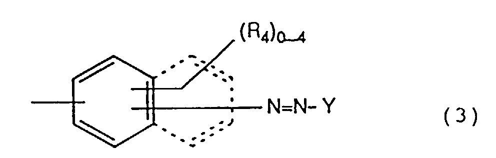 R et R', indépendamment l'un de l'autre, désignent un atome d'hydrogène ou un groupe alkyle en C₁-C₄ pouvant être substitué,
R₁ représente un groupe hydroxy, alcoxy en C₁-C₄, un atome de chlore, un atome de brome, un groupe (alkyle en C₁-C₄)thio, amino, un groupe N-mono(alkyle en C₁-C₄)amino ou N,N-di(alkyle en C₁-C₄)amino, non-substitués ou bien substitués dans la partie alkyle par hydroxy, sulfo, carboxy ou alcoxy en C₁-C₄ ; un groupe cyclohexylamino, un groupe phénylamino non-substitué ou substitué dans la partie phényle par alkyle en C₁-C₄, alcoxy en C₁-C₄, carboxy, sulfo et/ou halogène ; un groupe N-(alkyle en C₁-C₄)-N-phénylamino, morpholino ou un groupe 3-carboxy ou 3-carbamoylpyridine-1-yl,
R₂ et R₃, indépendamment l'un de l'autre, représentent un groupe alkyle en C₁-C₄, alcoxy en C₁-C₄ ou bien un groupe (alcanoyle en C₂-C₄)amino non-substitué ou substitué dans la partie alkyle par hydroxy ;
le reste phényle (a) ne comporte aucun autre substituant ou bien est en outre substitué par alkyle en C₁-C₄, alcoxy en C₁-C₄, halogène, hydroxy, carboxy, sulfo, (alcanoyle en C₂-C₄)amino non-substitué ou substitué par hydroxy ; ou par arylazo,
(R₄)₀₋₄ représente de 0 à 4 restes identiques ou différents choisis dans l'ensemble formé par les groupes alkyle en C₁-C₄, alcoxy en C₁-C₄, sulfo, chlore, carboxy et hydroxy, et Y représente un reste phényle ou un reste 1-phénylpyrazol-5-one ou 6-hydroxypyride-2-one ; les restes représentés par Y peuvent être substitués par alkyle en C₁-C₄, alcoxy en C₁-C₄, alcoxy en C₁-C₄-alkyle en C₁-C₄, par (alcanoyle en C₂-C₄)amino pouvant lui-même être substitué par hydroxy ; benzoylamino, amino, N-mono-(alkyle en C₁-C₄)amino ou N,N-di(alkyle en C₁-C₄)amino, non-substitués ou bien substitués dans la partie alkyle par -OH, -OCOCH₃, -OSO₃H, -CN ou halogène ; phénylamino, mono-sulfobenzylamino, di-sulfobenzylamino, (alcoxy en C₁-C₄)carbonyle, (alkyle en C₁-C₄)sulfonyle, phénylsulfonyloxy, trifluorméthyle, nitro, cyano, halogène, carbamoyle, N-mono(alkyle en C₁-C₄)carbamoyle, N,N-di-(alkyle en C₁-C₄)carbamoyle, sulfamoyle, N-mono(alkyle en C₁-C₄)sulfamoyle, N,N-di-(alkyle en C₁-c₄)sulfamoyle, N-(β-hydroxyéthyl)sulfamoyle, N,N-di-(β-hydroxyéthyl)-sulfamoyle, N-phénylsulfamoyle, hydroxy, carboxy, sulfo, sulfométhyle, ureido, ou phénylazo non-substitué ou substitué par sulfo, alkyle en C₁-C₄, alcoxy en C₁-C₄, hydroxy ou halogène.

2. Composés selon la revendication 1, **caractérisés** par le fait que R et R' représentent toujours de l'hydrogène.

3. Composés selon la revendication 1 ou 2, **caractérisés** par le fait que R₁ représente hydroxy, alcoxy en C₁-C₃, (alkyle en C₁-C₂)thio, amino, N-mono(alkyle en C₁-C₄)amino ou N,N-di-(alkyle en C₁-C₄)amino non-substitués ou substitués dans la partie alkyle par hydroxy, carboxy, sulfo, méthoxy ou éthoxy ; phénylamino non-substitué ou substitué dans la partie phényle par méthyle, méthoxy, chlore, carboxy et/ou sulfo, N-(alkyle en C₁-C₄)N-phénylamino ou morpholino.

4. Composés selon l'une des revendications 1 à 3, **caractérisés** par le fait que R₁ représente N-mono(alkyle en C₁-C₂)amino ou N,N-di-(alkyle en C₁-C₂)amino, non-substitués ou bien substitués dans la partie alkyle par hydroxy, carboxy ou méthoxy ou bien un groupe morpholino, éthylthio, phénylamino ou o-, m-, ou p-sulfophénylamino.

5. Composés selon l'une des revendications 1 à 4, **caractérisés** par le fait que R₁ représente un groupe N-β-hydroxyéthylamino, N,N-di-β-hydroxyéthylamino ou morpholino.

6. Composés selon l'une des revendications 1 à 5, **caractérisés** par le fait que R₂ et R₃, indépendamment l'un de l'autre, représentent méthyle, éthyle, méthoxy, éthoxy, acétylamino, propionylamino ou hydroxyacétylamino.

7. Composés selon l'une des revendications 1 à 6, **caractérisés** par le fait que R₂, R₃, indépendamment l'un de l'autre, représentent méthyle, méthoxy ou acétylamino.

8. Composés selon l'une des revendications 1 à 7, **caractérisés** par le fait que R₂ représente méthoxy et R₃ représente méthyle.

9. Composés selon l'une des revendications 1 à 8, **caractérisés** par le fait que le reste phényle (a) est non-substitué ou bien substitué par alkyle en C₁-C₄, alcoxy en C₁-C₄, chlore, hydroxy, carboxy, (alcanoyle en C₂-C₃)amino et/ou par phénylazo non-substitué ou substitué par sulfo, méthyle, méthoxy et/ou chlore.

10. Composés selon l'une des revendications 1 à 9, **caractérisés** par le fait que le reste phényle (a) est non-substitué ou bien porte en outre comme substituant méthyle, méthoxy, acétylamino ou chlore.

11. Composés selon l'une des revendications 1 à 10, **caractérisés** par le fait que A et A' et R et R' sont toujours identiques.

12. Composés selon l'une des revendications 1 à 11, **caractérisés** par le fait que (R₄)₀₋₄ représente de 0 à 4 restes identiques ou différents choisis dans l'ensemble formé par les groupes méthyle, méthoxy, chlore, hydroxy, carboxy et sulfo.

13. Composés selon l'une des revendications 1 à 10 ou 12, **caractérisés** par le fait que A' représente un reste différent de A et répondant à l'une des formules 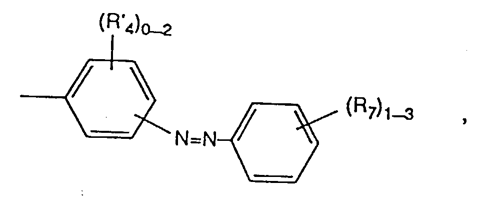 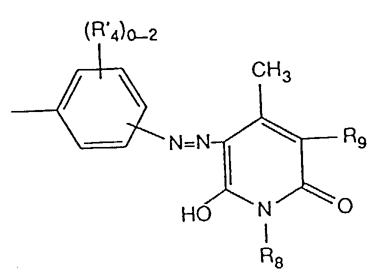 ou 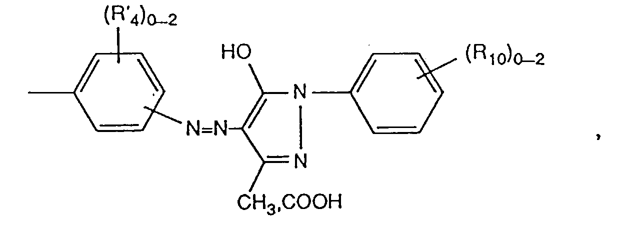 où (R'₄)₀₋₂ représente de 0 à 2 restes identiques ou différents choisis dans l'ensemble formé par les groupes méthyle, méthoxy, sulfo, chlore, hydroxy et carboxy ; (R₇)₁₋₃ représente de 1 à 3 restes identiques ou différents choisis dans l'ensemble formé par les groupes sulfo, méthyle, méthoxy, chlore, hydroxy, carboxy et o-, m- ou p-sulfophénylazo ; R₈ représente hydrogène, alkyle en C₁-C₄ ou (alcoxy en C₁-C₄)-alkyle en C₁-C₄) ; R₉ représente sulfométhyle, cyano ou carbamoyle et (R₁₀)₀₋₂ représente de 0 à 2 restes identiques ou différents choisis dans l'ensemble formé par les groupes méthyle, méthoxy, sulfo, hydroxy, amino, acétylamino et hydroxyacétylamino.

14. Composés selon la revendication 1, de formule 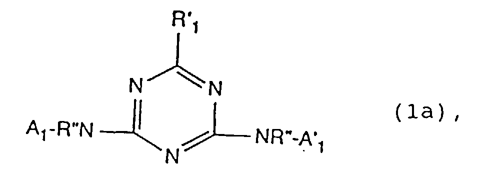 dans laquelle R" représente l'hydrogène, méthyle ou éthyle, R'₁ représente hydroxy, alcoxy en C₁-C₃ (alkyle en C₁-C₂)thio, amino, N-mono(alkyle en C₁-C₄)amino ou N,N-di-(alkyle en C₁-C₄)amino, non-substitués ou bien substitués dans la partie alkyle par hydroxy, carboxy, sulfo, méthoxy ou éthoxy ; phénylamino non-substitué ou bien substitué dans la partie phényle par méthoxy, méthyle, chlore, carboxy et/ou sulfo ; N-(alkyle en C₁-C₄)N-phénylamino ou morpholino ; A₁ représente un reste de formule 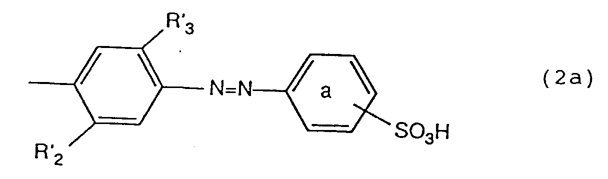 où R'₂ et R'₃, indépendamment l'un de l'autre, représentent méthyle, éthyle, méthoxy, éthoxy, acétylamino, propionylamino ou hydroxyacétylamino, et le reste phényle (a) est non-substitué ou bien porte en outre un substituant alkyle en C₁-C₄, alcoxy en C₁-C₄, halogène, hydroxy, carboxy, sulfo, (alcanoyle en C₂-C₄)amino non-substitué ou substitué par hydroxy, et/ou arylazo ; A'₁ a la signification de A₁ ou bien représente l'un des restes de formule 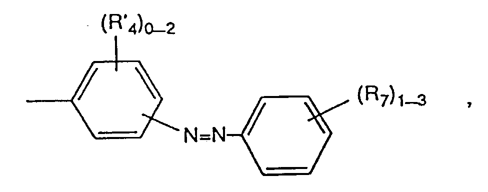 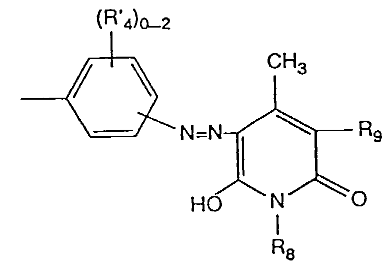 où 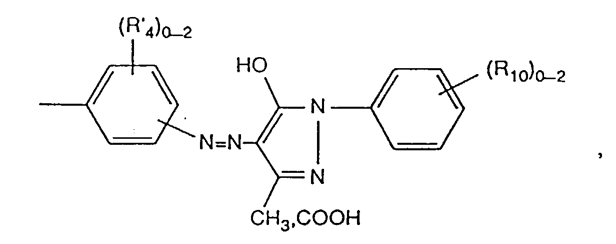 où (R'₄)₀₋₂, (R₇)₁₋₃, R₈, R₉ et (R₁₀)₀₋₂ ont toujours la signification indiquée dans la revendication 13.

15. Composés selon la revendication 14, **caractérisés** par le fait que le reste A₁ et le reste A'₁ sont identiques.

16. Composés selon la revendication 1, de formule 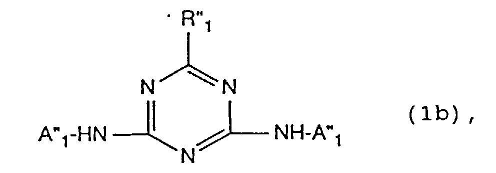 où R"₁ représente N-mono(alkyle en C₁-C₂)amine ou N,N-di-(alkyle en C₁-C₂)amino, non-substitués ou bien substitués dans la partie alkyle par carboxy, hydroxy ou méthoxy ; morpholino, éthylthio, phénylamino ou bien o-, m- ou p-sulfophénylamino, et A"₁ représente un reste de formule 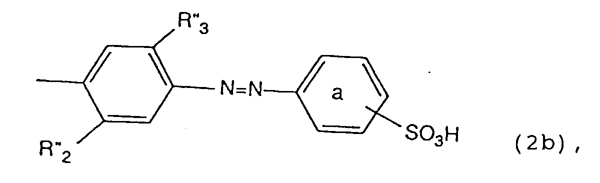 où R"₂ et R"₃, indépendamment l'un de l'autre, représentent méthyle, méthoxy ou acétylamino, et le reste phényle (a) est non-substitué ou bien substitué par alkyle en C₁-C₄, alcoxy en C₁-C₄, chlore, hydroxy, carboxy, (alcanoyle en C₂-C₃)amino et/ou par phénylazo non-substitué ou substitué par sulfo, méthyle, méthoxy et/ou chlore.

17. Composés selon la revendication 1, de formule 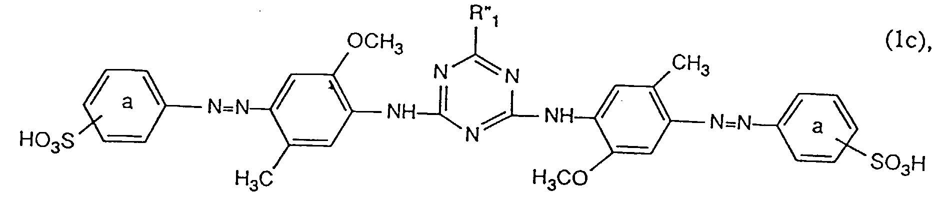 dans laquelle R"₁ représente N-β-hydroxyéthylamino, N,N-di-β-hydroxyéthylamino ou morpholino et le reste phényle est non-substitué ou bien porte en outre un substituant méthyle, méthoxy, acétylamino ou chlore.

18. Procédé de préparation de composés de formule (1), selon la revendication 1, **caractérisé** par le fait qu'on fait réagir un composé de formule 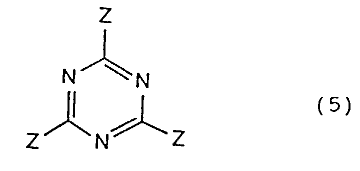 l'un après l'autre, et dans un ordre quelconque, avec un composé de formule
A-NHR (6),
un composé de formule
A'-NHR' (7)
et un composé de formule
R₁-H (8)
où A, A', R, R' et R₁ représentent toujours la signification indiquée dans la revendication 1 et Z représente un atome d'halogène et de préférence un atome de chlore.

19. Utilisation des colorants selon l'une des revendications 1 à 17 pour la teinture et l'impression de fibres contenant de l'azote et en particulier de fibres cellulosiques.

20. Utilisation selon la revendication 19, **caractérisée** par le fait qu'on teint des fibres mixtes comprenant des fibres synthétiques et des fibres cellulosiques et en particulier des tissus mixtes polyester/coton, en présence d'un colorant de dispersion pour les fibres de polyester, selon les instructions de teinture pour les fibres de polyester.

21. Procédé de teinture de fibres mixtes polyester/coton avec des colorants de dispersion et de colorants directs, **caractérisé** par le fait qu'on utilise, en une seule étape, dans un procédé à un seul bain, à côté des colorants de dispersion, des colorants de formule (1), selon la revendication 1 et qu'on teint dans un bain aqueux, à des températures comprises entre 100 et 150°C et de préférence entre 120 et 130°C et à un pH compris entre 4 et 7,5.

## Revendications (Revendications pour l'(les) Etat(s) contractant(s) suivant(s): ES)

1. Procédé de préparation de composés de formule 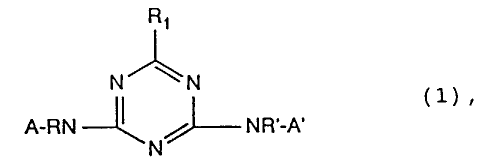 où A représente un reste de formule 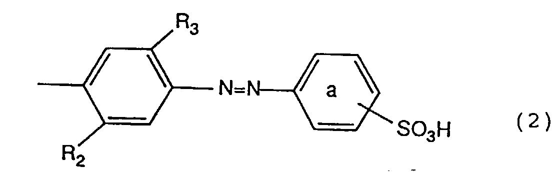 A' a la signification de A ou bien représente un reste de formule 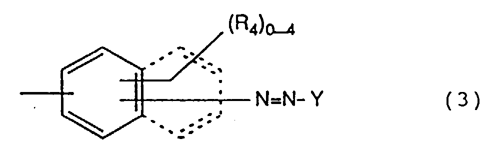 R et R', indépendamment l'un de l'autre, représentent l'hydrogène ou un reste alkyle en C₁-C₄ pouvant être substitué,
R₁ représente hydroxy, alcoxy en C₁-C₄, chlore, brome, (alkyle en C₁-C₄)thio, amino, N-mono(alkyle en C₁-C₄)amino ou N,N-di(alkyle en C₁-C₄)amino, non-substitués ou bien substitués dans la partie alkyle par hydroxy, sulfo, carboxy ou alcoxy en C₁-C₄ ; cyclohexylamino ; phénylamino non-substitué ou substitué dans la partie phényle par alkyle en C₁-C₄, alcoxy en C₁-C₄, carboxy, sulfo et/ou halogène ou bien N-(alkyle en C₁-C₄)-N-phénylamino, morpholino ou un groupe 3-carboxy- ou 3-carbamoylpyridine-1-yl ;
R₂ et R₃, indépendamment l'un de l'autre, représentent alkyle en C₁-C₄, alcoxy en C₁-C₄ ou bien (alcanoyle en C₂-C₄)amino non-substitué ou substitué dans la partie alkyle par hydroxy ;
le reste phényle (a) ne comporte aucun autre substituant ou bien est en outre substitué par alkyle en C₁-C₄, alcoxy en C₁-C₄, halogène, hydroxy, carboxy, sulfo, (alcanoyle en C₂-C₄)amino non-substitué ou substitué par hydroxy ; ou arylazo,
(R₄)₀₋₄ représente de 0 à 4 restes identiques ou différents choisis dans l'ensemble formé par les groupes alkyle en C₁-C₄, alcoxy en C₁-C₄, sulfo, chlore, carboxy et hydroxy, et
Y représente un reste phényle ou bien le reste 1-phénylpyrazol-5-one ou 6-hydroxypyride-2-one où le reste représenté par Y peut être substitué par alkyle en C₁-C₄, alcoxy en C₁-C₄, (alcoxy en C₁-C₄)-(alkyle en C₁-C₄), (alcanoyle en C₂-C₄)amino pouvant être substitué en outre par hydroxy ; benzoylamino, amino, N-mono-(alkyle en C₁-C₄)amino ou N,N-di(alkyle en C₁-C₄)amino, non-substitués ou bien substitués dans la partie alkyle par -OH, -OCOCH₃,-OSO₃H, -CN ou halogène ; phénylamino, mono- ou disulfobenzylamino, (alcoxy en C₁-C₄)carbonyle, (alkyle en C₁-C₄)sulfonyle, phénylsulfonyloxy, trifluorméthyle, nitro, cyano, halogène, carbamoyle, N-mono(alkyle en C₁-C₄)carbamoyle, N,N-di-(alkyle en C₁-C₄)carbamoyle, sulfamoyle, N-mono(alkyle en C₁-C₄)sulfamoyle, N,N-di-(alkyle en C₁-C₄)sulfamoyle, N-(β-hydroxyéthyl)sulfamoyle, N,N-di-(β-hydroxyéthyl)-sulfamoyle, N-phénylsulfamoyle, hydroxy, càrboxy, sulfo, sulfométhyle, ureido ou phénylazo non-substitué ou substitué par sulfo, alkyle en C₁-C₄, alcoxy en C₁-C₄, hydroxy ou halogène, caractérisé par le fait qu'on fait réagir un composé de formule 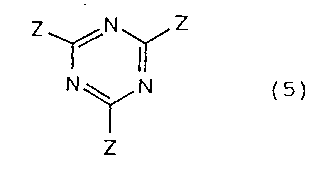 l'un après l'autre, et dans un ordre quelconque, avec un composé de formule
A-NHR (6),
avec un composé de formule
A'-NHR' (7)
avec un composé de formule
R₁-H (8)
où A, A', R, R' et R₁ ont toujours la signification ci-dessus indiquée et Z représente un atome d'halogène et de préférence un atome de chlore.

2. Procédé selon la revendication 1, **caractérisé** par le fait que R et R' représentent toujours de l'hydrogène.

3. Procédé selon la revendication 1 ou 2, **caractérisé** par le fait que R₁ représente hydroxy, alcoxy en C₁-C₃, (alkyle en C₁-C₂)thio, amino, N-mono(alkyle en C₁-C₄)amino ou N,N-di-(alkyle en C₁-C₄)amino, non-substitués ou bien substitués dans la partie alkyle par hydroxy, carboxy, sulfo, méthoxy ou éthoxy ; phénylamino non-substitué ou substitué dans la partie alkyle par méthyle, méthoxy, chlore, carboxy et/ou sulfo ; N-(alkyle en C₁-C₄)-N-phénylamino ou morpholino.

4. Procédé selon l'une des revendications 1 à 3, **caractérisé** par le fait que R₁ représente N-mono(alkyle en C₁-C₂)amino ou N,N-di-(alkyle en C₁-C₂)amino, non-substitués ou substitués dans la partie alkyle par hydroxy, carboxy ou méthoxy ; morpholino, éthylthio, phénylamino ou o-, m- ou p-sulfophénylamino.

5. Procédé selon l'une des revendications 1 à 4, **caractérisé** par le fait que R₁ représente N-β-hydroxyéthylamino, N,N-di-β-hydroxyéthylamino ou morpholino.

6. Procédé selon l'une des revendications 1 à 5, **caractérisé** par le fait que R₂ et R₃, indépendamment l'un de l'autre, représentent méthyle, éthyle, méthoxy, éthoxy, acétylamino, propionylamino ou hydroxyacétylamino.

7. Procédé selon l'une des revendications 1 à 6, **caractérisé** par le fait que R₂ et R₃, indépendamment l'un de l'autre, représentent méthyle, méthoxy ou acétylamino.

8. Procédé selon l'une des revendications 1 à 7, **caractérisé** par le fait que R₂ représente méthoxy et R₃ représente méthyle.

9. Procédé selon l'une des revendications 1 à 8, **caractérisé** par le fait que le reste phényle (a) est non-substitué ou bien porte en outre comme substituant alkyle en C₁-C₄, alcoxy en C₁-C₄, chlore, hydroxy, carboxy, (alcanoyle en C₂-C₃)amino et/ou phénylazo non-substitué ou substitué par sulfo, méthyle, méthoxy et/ou chlore.

10. Procédé selon l'une des revendications 1 à 9, **caractérisé** par le fait que le reste phényle (a) est non-substitué ou bien porte en outre un substituant méthyle, méthoxy, acétylamino ou chlore.

11. Procédé selon l'une des revendications 1 à 10, **caractérisé** par le fait que A et A' et R et R' sont toujours identiques.

12. Procédé selon l'une des revendications 1 à 11, **caractérisé** par le fait que (R₄)₀₋₄ représente de 0 à 4 restes identiques ou différents choisis dans l'ensemble formé par les groupes méthyle, méthoxy, chlore, hydroxy, carboxy et sulfo.

13. Procédé selon l'une des revendications 1 à 10 ou 12, **caractérisé** par le fait que A' représente un reste différent de A, répondant à l'une des formules 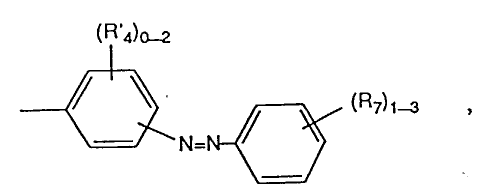 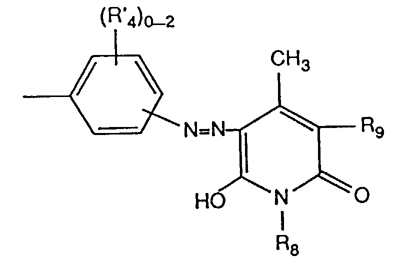 ou 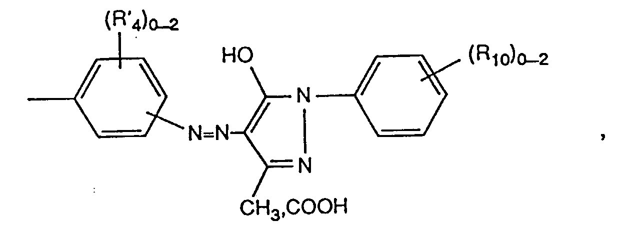 où (R'₄)₀₋₂ représente de 0 à 2 restes identiques ou différents choisis dans l'ensemble formé par les groupes méthyle, méthoxy, sulfo, chlore, hydroxy et carboxy ; (R₇)₁₋₃ représente de 1 à 3 substituants identiques ou différents choisis dans l'ensemble formé par les groupes sulfo, méthyle, méthoxy, chlore, hydroxy, carboxy et o-, m-ou p-sulfophénylazo ; R₈ représente hydrogène, alkyle en C₁-C₄ ou (alcoxy en C₁-C₄)-alkyle en C₁-C₄ ; R₉ représente sulfométhyle, cyano ou carbamoyle et (R₁₀)₀₋₂ représente de 0 à 2 restes identiques ou différents choisis dans l'ensemble formé par les groupes méthyle, méthoxy, sulfo, hydroxy, amino, acétylamino et hydroxyacétylamino.

14. Procédé selon la revendication 1 pour la préparation des composés de formule 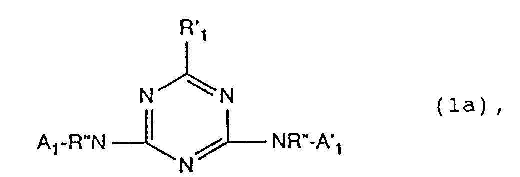 où R" représente hydrogène, méthyle ou éthyle, R'₁ représente hydroxy, alcoxy en C₁-C₃ (alkyle en C₁-C₂)thio, amino, N-mono(alkyle en C₁-C₄)amino ou N,N-di-(alkyle en C₁-C₄)amino, non-substitués ou substitués dans la partie alkyle par hydroxy, carboxy, sulfo, méthoxy ou éthoxy, ou bien phénylamino non-substitué ou substitué dans la partie phényle par méthoxy, méthyle, chlore, carboxy et/ou sulfo ; N-(alkyle en C₁-C₄)N-phénylamino ou morpholino,
A₁ représente un reste de formule 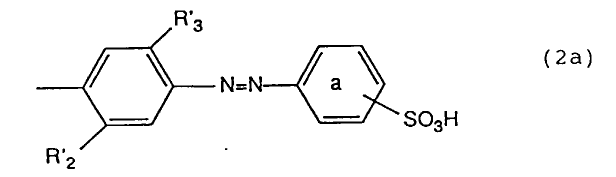 où R'₂ et R'₃, indépendamment l'un de l'autre, représentent méthyle, éthyle, méthoxy, éthoxy, acétylamino, propionylamino ou hydroxyacétylamino, et le reste phényle (a) est non-substitué ou bien est substitué par alkyle en C₁-C₄, alcoxy en C₁-C₄, halogène, hydroxy, carboxy, sulfo, (alcanoyle en C₂-C₄)amino non-substitué ou substitué par hydroxy et/ou arylazo, et A'₁ a la signification de A₁ ou bien représente l'un des restes de formule 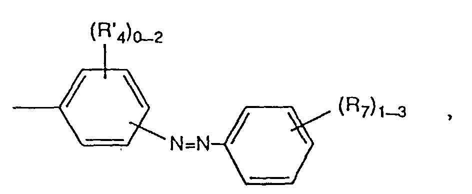 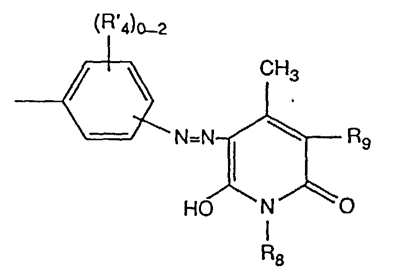 ou 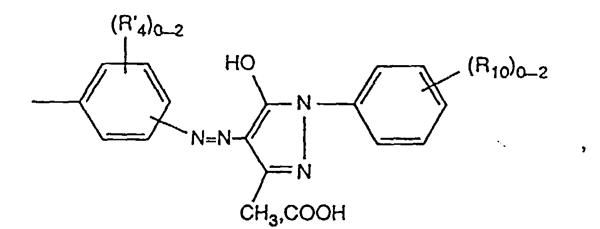 où (R'₄)₀₋₂, (R₇)₁₋₃, R₈, R₉ et (R₁₀)₀₋₂ ont toujours la signification indiquée dans la revendication 13.

15. Procédé selon la revendication 14, **caractérisé** par le fait que les restes A₁ et A'₁ sont identiques.

16. Procédé selon la revendication 1 pour la préparation de composés de formule 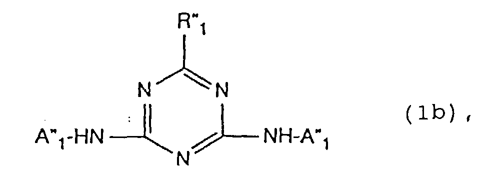 où R"₁ représente N-mono(alkyle en C₁-C₂)amino ou N,N-di-(alkyle en C₁-C₂)amino, non-substitués ou bien substitués dans la partie alkyle par carboxy, hydroxy ou méthoxy ; morpholino, éthylthio, phénylamino ou o-, m- ou p-sulfophénylamino, et A"₁ représente un reste de formule 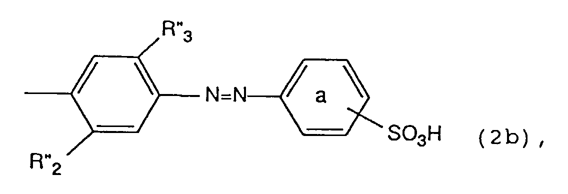 où R"₂ et R"₃, indépendamment l'un de l'autre, représentent méthyle, méthoxy ou acétylamino, et le reste phényle (a) est non-substitué ou bien porte en outre comme substituant alkyle en C₁-C₄, alcoxy en C₁-C₄, chlore, hydroxy, carboxy, (alcanoyle en C₂-C₃)amino et/ou phénylazo non-substitué ou substitué par sulfo, méthyle, méthoxy et/ou chlore.

17. Procédé de préparation, selon la revendication 1, de composés de formule 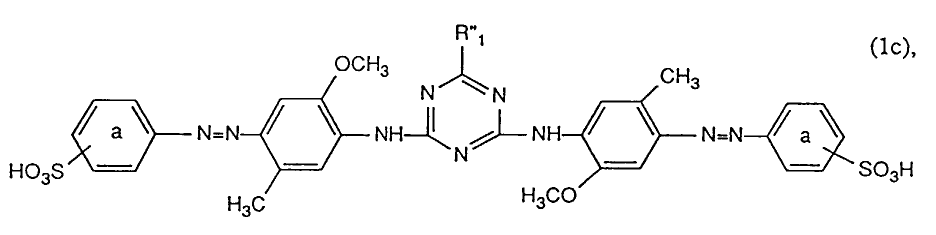 dans laquelle R"₁ représente N-β-hydroxyéthylamino, N,N-di-β-hydroxyéthylamino ou morpholino et le reste phényle est non-substitué ou bien porte en outre comme substituant méthyle, méthoxy, acétylamino ou chlore.

18. Utilisation pour la teinture ou l'impression de fibres renfermant de l'azote et en particulier de fibres cellulosiques de colorants selon l'une des revendications 1 à 17.

19. Utilisation selon la revendication 18, **caractérisée** par le fait qu'on teint des fibres mixtes comprenant des fibres synthétiques et des fibres cellulosiques et en particulier des tissus mixtes polyester/coton, en présence de colorants de dispersion pour des fibres de polyester, selon les instructions de teinture pour les fibres de polyester.

20. Procédé de teinture de tissus mixtes polyester/coton à l'aide de colorants de dispersion et de colorants directs, **caractérisé** par le fait que dans un procédé de teinture en une seule étape, et en un seul bain, on utilise à côté des colorants de dispersion des colorants de formule (1), préparés selon la revendication 1 et qu'on teint dans un bain aqueux à des températures comprises entre 100 et 150°C et de préférence entre 120 et 130°C et à un pH compris entre 4 et 7,5.
